## Europäisches Patentamt
## European Patent Office
## Office européen des brevets

(11) Veröffentlichungsnummer: **0 377 163 B1**

# EUROPÄISCHE PATENTSCHRIFT

(45) Veröffentlichungstag der Patentschrift: **14.12.94**

(51) Int. Cl.5: **A01D 41/12**

(21) Anmeldenummer: **89123356.1**

(22) Anmeldetag: **18.12.89**

(54) **Regelvorrichtung und Verfahren zum Anpassen der Aufnahmegeschwindigkeit einer Aufnahmeeinrichtung an einer fahrbaren Erntemaschine.**

(30) Priorität: **05.01.89 US 294533**

(43) Veröffentlichungstag der Anmeldung:
**11.07.90 Patentblatt 90/28**

(45) Bekanntmachung des Hinweises auf die Patenterteilung:
**14.12.94 Patentblatt 94/50**

(84) Benannte Vertragsstaaten:
**DE FR IT**

(56) Entgegenhaltungen:
EP-A- 0 122 343    EP-A- 0 201 658
FR-A- 2 560 404    GB-A- 1 375 827
GB-A- 2 205 179    US-A- 4 142 348
US-A- 4 337 611    US-A- 4 376 298
US-A- 4 430 846    US-A- 4 487 002
US-A- 4 527 241

(73) Patentinhaber: **DEERE & COMPANY**
**1 John Deere Road**
**Moline, Illinois 61265 (US)**

(72) Erfinder: **Ziegler, Duane Herbert**
**1109 Melodie Lane**
**Colona Illinois 61242 (US)**
Erfinder: **Barbaro, Charles Peter**
**3721 46th Street**
**Rock Island Illinois 61201 (US)**
Erfinder: **Dewey, David Keith**
**327 Sunset Road**
**Waterloo Iowa 50701 (US)**
Erfinder: **Wildemuth, Steven Laverne**
**4325 Aspen Hills Circle**
**Bettendorf Iowa 52722 (US)**
Erfinder: **Nelson, Frederick William**
**3522 70th St.**
**Moline Illinois 61265 (US)**
Erfinder: **Friend, Kenneth Dale**
**1112 W. 4th St.**
**Cedar Falls Iowa 50613 (US)**
Erfinder: **Pickett, Terence Daniel**
**165 Montrose**
**Waterloo Iowa 50701 (US)**

(74) Vertreter: **Feldmann, Bernhard**
**DEERE & COMPANY**
**European Office**
**Patent Department**
**D-68140 Mannheim (DE)**

Rank Xerox (UK) Business Services
(3.10/3.09/3.3.3)

EP 0 377 163 B1

**Beschreibung**

Regelvorrichtung für eine fahrbare Erntemaschine mit einer Erntebergungsvorrichtung, die eine Aufnahmeinrichtung enthält, die als Haspel oder als Pflücker oder als Gebiß oder als Pick-Up ausgebildet und über ein geschwindigkeitsvariables Getriebe antreibbar ist, wobei die Antriebsgeschwindigkeit dar Aufnahmeinrichtung in Abhängigkeit von der Fortbewegungsgeschwindigkeit der Erntemaschine über ein Ventil veränderbar ist, mit einem Geschwindigkeitssensor zur Erfassung der Fortbewegungsgeschwindigkeit der Erntemaschine.

Eine derartige Regelvorrichtung ist aus der Praxis bekannt.

Fahrbare Erntemaschinen, insbesondere Mähdrescher, sind mit einer Aufnahmeeinheit versehen, die der Aufnahme des zu erntenden Guts von oder aus dem Boden dienen. So wird Getreide mittels eines Schneidwerks vom Boden getrennt und mit einer Schnecke in das Innere der Erntemaschine zur weiteren Bearbeitung gefördert. Das Schneidwerk trägt eine Haspel, die das Getreide in eine Lage bringt, in der es problemlos von dem Schneidwerk erfaßt und abgeschnitten werden kann. Um zu vermeiden, daß durch die Einwirkung der Haspel auf das Getreide Körner aus den Ähren geschüttelt werden und auf den Boden fallen, soll die Abrollgeschwindigkeit der Haspel ungefähr der Fortbewegungsgeschwindigkeit der Erntemaschine entsprechen. Da die zu erntenden Bestände unterschiedlich dicht sind, da die Bodenbeschaffenheit variiert und/oder da die Fortbewegungsgeschwindigkeit der Erntemaschine durch das Gewicht des in ihrem Behälter angesammelten ausgedroschenen Guts beeinträchtigt wird, ändert sich die Fortbewegungsgeschwindigkeit der Erntemaschine über das Feld ständig. Konsequenterweise müßte zugleich die Abrollgeschwindigkeit der Haspel korrigiert werden. Weil die Geschwindigkeitsänderung häufig von kurzer Dauer ist, wird dies aber meist unterlassen.

Die gleiche Situation stellt sich auch bei Maisgebissen und/oder Maispflückern, die an einen Maishäcksler bzw. einen Mähdrescher angebaut sind. Bei derartigen Erntebergungsvorrichtungen müssen vorgesehene Pflückwalzen oder Förderriemen oder -ketten mit einer Geschwindigkeit angetrieben werden, die der Relativgeschwindigkeit der Erntemaschine gegenüber den noch nicht vom Boden getrennten Stengeln entspricht. Mit einer Änderung der Fortbewegungsgeschwindigkeit müßte auch eine Änderung der Aufnahmegeschwindigkeit der Pflückwalzen oder Förderriemen oder - ketten einhergehen. Oftmals, insbesondere bei älteren Ausführungen, kann die Aufnahmegeschwindigkeit der Pflückwalzen oder Förderriemen oder -ketten nur durch den Austausch von Wechselrädern durchgeführt werden.

Zur Vermeidung einer manuell durchzuführenden Nachstellung der Geschwindigkeit der Aufnahmeeinrichtung, sei es eine Haspel, eine Pflückvorrichtung oder dergleichen, wurde bereits eine automatische elektrische Steuerung vorgeschlagen, die für eine ständige Angleichung sorgt, sh. "Automatic Reel Control 'Saves Up to 2 Bu./Acre'", Farm Show, Vol. 6, Eagle Engineering & Manufacturing Inc. Danach wird über eine Steuervorrichtung ein elektrohydraulisches Ventil verstellt, das auf den Antrieb der Aufnahmeeinrichtung wirkt und diesen beschleunigt oder abbremst.

Diese Steuervorrichtung erscheint hinsichtlich ihrer Genauigkeit und Bedienungsmöglichkeit nicht ausreichend.

So muß zum einen die Aufnahmegeschwindigkeit anfänglich auf den richtigen Wert gebracht werden, was nur während des Erntevorgangs möglich ist, in dessen Verlauf aber eine Änderung der Fortbewegungsgeschwindigkeit auftreten kann. Zum anderen kann eine Änderung des Durchmessers der Antriebsräder und/oder Schlupf in dem oft von Riemen gebildeten Antrieb der Aufnahmeeinrichtung, oder an deren Rutschkupplung oder Leckagen in deren hydraulischem Antrieb zu einer falschen Aufnahmegeschwindigkeit führen.

Es wurden auch bereits Überlegungen angestellt, im Rahmen einer Automatisierung am Mähdrescher eine Änderung der Aufnahmegeschwindigkeit in Abhängigkeit von der Fortbewegungsgeschwindigkeit mittels eines Microcomputers durchzuführen, s.h. Automatisierung am Mähdrescher, Grundl. Landtechnik Bd. 35 (1985) Nr. 4. Diese Anstrengungen haben jedoch bisher zu keiner Lösung geführt.

Die GB-A-1375827 offenbart eine Regelvorrichtung für die Antriebsgeschwindigkeit einer Haspel an einem Mähdrescher und weist für den Regelvorgang außer Drehzahlsensoren und einem Stellventil eine mechanische Rückführeinrichtung auf. Es ist ein Comparator, d. h. ein Vergleicher, vorgesehen, der die Größe verschiedener analoger Signale vergleicht. Ein solcher Comparator kann nicht erkennen, welcher Art eine Erntebergungsvorrichtung ist und welche Besonderheiten sie aufweist.

Bei dieser bekannten Regelvorrichtung ist es nachteilig, daß beim Austausch des Schneidwerks an dem Mähdrescher gegen einen anderen Vorsatz eine Regelung der nunmehr in Abhängigkeit von der Fahrtgeschwindigkeit zu regelnden Antriebe nicht mehr möglich ist.

Die EP-A-0 201 658 offenbart ein Dosiergerät für verschiedenartige Verteilgeräte, z. B. in der Art von Düngerstreuern und dergl., das einen Mikrocomputer zum Verarbeiten von Signalinformationen enthält, aus denen unter anderem erkennbar ist, um welche Art Dosiergerät es sich handelt.

Somit bezieht sich das Bekannte aus der EP-A-0 201 658 nicht auf das Gebiet der Erntebergung, sondern auf die Saatausbringung.

Die Besonderheiten bei der Erntebergung liegen darin, daß Erntegut in eine Maschine aufgenommen und verarbeitet werden muß und die Aufnahmegeschwindigkeit für die Reibungslosigkeit des daran anschließenden Verarbeitungsprozesses in der Maschine ausschlaggebend ist. Bei diesem Stand der Technik hingegen wird das Material (Saatgut, Dünger, ..) abgeworfen und beeinträchtigt die Maschine in keiner Weise. Ob die Menge des abgeworfenen Materials einer Sollmenge entspricht, ist auf die Funktion der Maschine vollkommen ohne Belang.

Die der Erfindung zugrunde liegende Aufgabe wird darin gesehen, eine Regelvorrichtung für eine fahrbare Erntemaschine mit einer Erntebergungseinrichtung derart auszubilden, daß sie auch bei unterschiedlichen Erntebergungsvorrichtungen verwendbar ist.

Diese Aufgabe ist erfindungsgemäß durch die Merkmale des Patentanspruchs 1 und des Patentanspruchs 8 gelöst worden, wobei in den weiteren Patentansprüchen Merkmale aufgeführt sind, die die Lösung in vorteilhafter Weise weiterentwickeln.

Auf diese Weise wird die Geschwindigkeit der Aufnahmeeinrichtung nicht nur gesteuert, sondern geregelt, d. h. beim Auftreten einer Differenz zwischen der errechneten Soll-Aufnahmegeschwindigkeit und der z. B. aufgrund Schlupf eingetretenen Ist-Aufnahmegeschwindigkeit erfolgt eine Korrektur. Wechseln sich liegende und stehende Bestände auf einem Feld ab, kann durch eine Eingabe an dem Verhältnisschalter eine mehr oder weniger aggressive Förderung der Aufnahmeeinrichtung eingestellt werden.

Eine universelle Anwendbarkeit der Regelvorrichtung bzw. des Verfahrens ergibt sich insbesondere dann, wenn die Erntemaschine mit einem Anbaugeräteschalter versehen ist, der die jeweils verwendete Art der Aufnahmeeinrichtung (Haspel, Pick-Up, Maisgebiß, Maispflücker, Stripper, u.s.w.) erkennt und dem Microcomputer ein Signal gibt, das diesen veranlaßt, das Ausgabesignal an den Bereich der Aufnahmegeschwindigkeit der betreffenden Aufnahmeeinrichtung anzupassen.

Das von dem Microcomputer ausgesandte Signal, das die gewünschte Aufnahmegeschwindigkeit einstellen soll, wird einem hydraulisch arbeitenden als Regelventil ausgebildeten Ventil zugeführt, das den Volumenstrom zu einem Motor, sei es ein Rotationsmotor oder ein Linearmotor, der ein mechanisches Getriebe verstellt, entsprechend beeinflußt. Dennoch könnte das Regelsignal auch direkt auf einen Elektromotor wirken, der ebenfalls eine Verstellung des Übersetzungsverhältnisses vornimmt.

Zur Übersteuerung des Microcomputers ist ein Schalter vorgesehen, der eine manuelle Änderung der Haspeldrehzahl zuläßt, was z. B. dann nutzbar ist, wenn die Erntemaschine im Stand betrieben wird, weil das Schneidwerk kurzzeitig verstopft ist.

Das erfindungsgemäße Verfahren bewirkt eine Verknüpfung der Werte der Aufnahmegeschwindigkeit, d. h. der Drehzahl einer Haspel, der Drehzahl von Pflückwalzen, der Umlaufgeschwindigkeit von Ketten oder Riemen eines Maisgebisses etc., der Fortbewegungsgeschwindigkeit der Erntemaschine und des gewünschten Abhängigkeitsverhältnisses zwischen den vorgenannten Geschwindigkeiten, um daraus ein geeignetes Ausgangssignal zu bilden.

In die Bildung des Ausgangssignals wird gegebenenfalls die Art der Aufnahmeeinrichtung miteinbezogen, was von Vorteil ist, weil z. B. die Drehzahl einer Haspel weitaus niedriger ist als die von Pflückwalzen.

Um dem Microcomputer einen Anhaltspunkt zu geben, wie groß das Ausgangssignal sein soll, enthält er in einem dauerhaften Speicher eine Tabelle oder Kurve, in der die gewünschte Abhängigkeit aufgezeigt ist. Wenngleich die Kurve linear verlaufen könnte, so ist ein progressiver Verlauf doch von Vorteil, da mit zunehmendem Abstand zwischen dem Ist- und dem Soll-Wert der Aufnahmegeschwindigkeit eine Beschleunigung der Verstellung möglich ist. Die Kurve kann auch abhängig davon, ob die Aufnahmegeschwindigkeit herab-oder heraufgesetzt werden soll, unterschiedlich ausgebildet sein, um der Trägheit der Massen Rechnung zu tragen.

Das Verfahren sieht darüber hinaus einen Diagnose-Abschnitt mit der Anzeige von Fehlermeldungen vor, der dann gewählt werden kann, wenn die Aufnahmegeschwindigkeit der Aufnahmeeinheit nicht gerade manuell verstellt wird und insbesondere die in den Unteransprüchen beschriebenen Funktionsmerkmale aufweist.

In der Zeichnung ist ein nachfolgend näher beschriebenes Ausführungsbeispiel der Erfindung dargestellt. Es zeigt:

Fig. 1      eine Erntemaschine in Seitenansicht,

Fig. 2      einen schematisch dargestellten Ablaufplan einer automatischen Regelvorrichtung zum Regeln der Geschwindigkeit einer Aufnahmeeinheit,

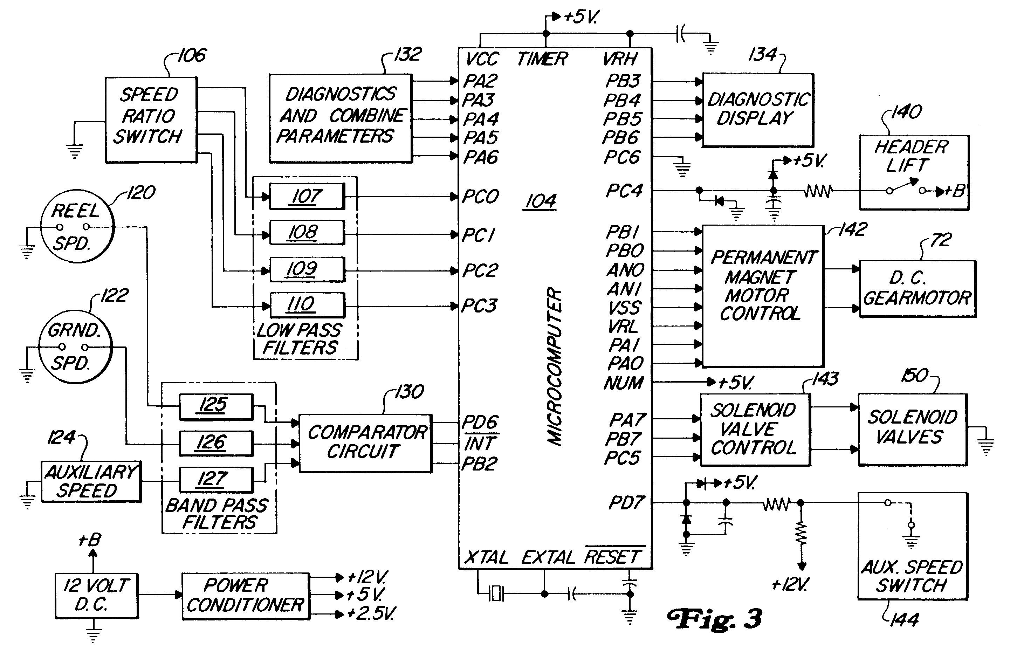

Fig. 3      einen Schaltplan der elektrischen Verbindungen der Regelvorrichtung,

Fig. 4      einen Schaltplan der elektrischen Verbindungen mit einer Eingabeeinheit für eine

EP 0 377 163 B1

|  | Bedienungsperson, |
|---|---|
| Fig. 5 | einen Schaltplan der elektrischen Verbindungen mit einer Sensor-Eingabe-Einheit, |
| Fig. 6 | einen Schaltplan der elektrischen Verbindungen mit einer Diagnoseeinheit, |
| Fig. 7 | einen Schaltplan der elektrischen Verbindungen mit einem Gleichstrommotor und mit Magnetventilen zum Steuern des Antriebs eines Schneidwerks oder einer Pflückvorrichtung, |
| Fig. 8 | einen Programmablaufplan zur Software, die in der automatischen Regelvorrichtung benutzt wird, |
| Fig. 9 | einen Programmablaufplan des Teils der Software, der sich auf die Regelung der Drehzahl einer Haspel eines Schneidwerks bezieht, |
| Fig. 10 | einen Programmablaufplan des Teils der Software, der sich auf die Regelung einer Pflückerwalzendrehzahl eines Pflückers bezieht, |
| Fig. 11 | einen Programmablaufplan des Teils der Software, der sich auf die Diagnoseeinheit bezieht, |
| Fig. 12a und 12b | Programmablaufpläne der Teile der Software, die sich auf Programmunterschleifen der Diagnoseeinheit beziehen und |
| Fig. 13 | eine Darstellung der variablen Verstärkungsart des Gleichstrommotors. |

Funktion einer Erntemaschine

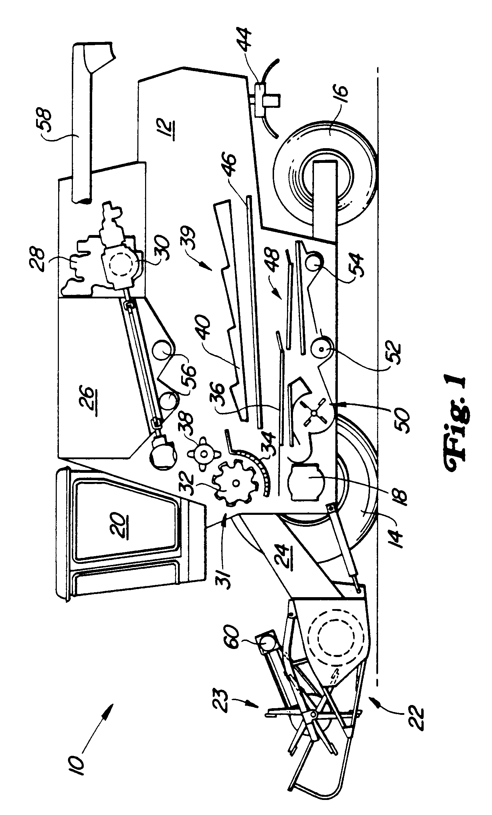

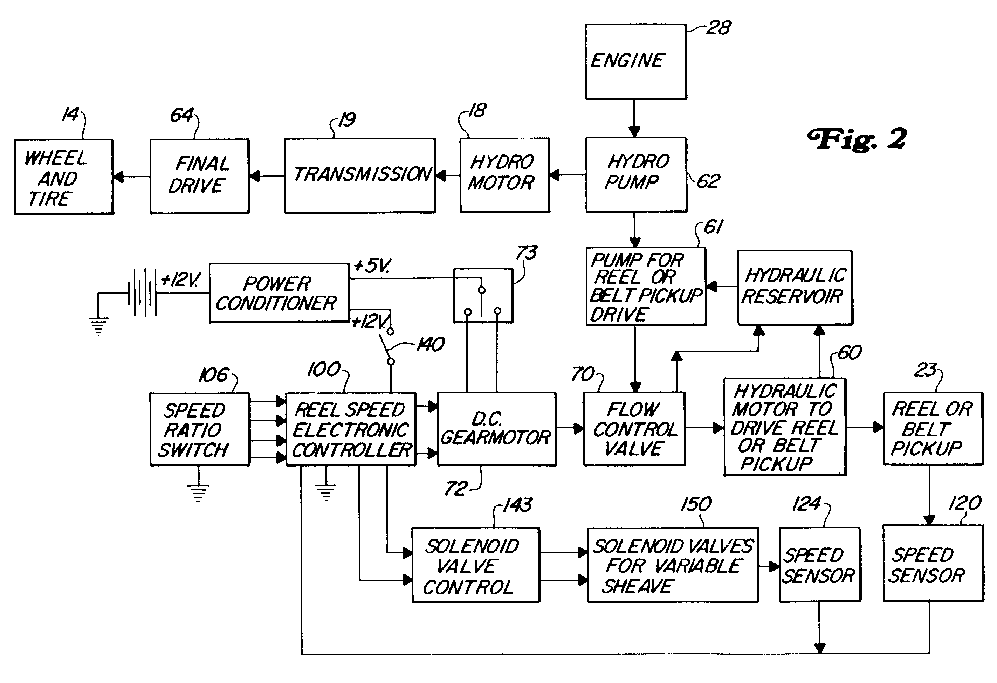

In Figur 1 ist eine landwirtschaftliche Erntemaschine 10 in der Art eines Mähdreschers dargestellt, die einen Rahmen 12 und vordere und rückwärtige auf dem Boden abrollende Räder 14 und 16 aufweist. Die vorderen Räder 14 werden von einem Hydraulikmotor 18 angetrieben, der zwischen den Rädern 14 angeordnet und mit einem dazupassenden, entsprechenden Getriebe 19 (sh. Fig. 2) verbunden ist. Die Bedienung der Erntemaschine 10 erfolgt durch eine nicht gezeigte Bedienungsperson, für die eine Fahrerkabine 20 vorgesehen ist. Eine Erntebergungsvorrichtung 22 in der Art eines Schneidwerks mit einer als Haspel ausgebildeten Aufnahmeeinrichtung 23 erstreckt sich von dem Rahmen 12 aus nach vorne, d. h. in Fig. 1 nach links und dient dazu, auf einem Feld stehende Früchte abzuernten.

Die oben beschriebene Erntebergungsvorrichtung 22 und die Aufnahmeeinrichtung 23 entsprechen den in der US-A-4,008,558 beschriebenen, auf die hiermit ausdrücklich Bezug genommen wird.

Nach dem Abernten der Früchte werden diese durch ein Fördergehäuse 24 dem Inneren der Erntemaschine 10 zugeführt. Hinter der Fahrerkabine 20 ist ein Korntank 26 im oberen Bereich der Erntemaschine 10 vorgesehen. Rückwärtig des Korntanks 26 erstreckt sich quer zur Längsachse der Erntemaschine 10 ein Verbrennungsmotor 28, der deren Hauptantrieb darstellt und einen Fortbewegungsteil, einen Ernteteil, einen Dreschteil 31 und einen Abscheideteil 39 antreibt, die weiter unten aufgeführt sind. Zu diesem Zweck ist an den Verbrennungsmotor 28 ein Antriebsstrang 30 angeschlossen, durch den die Leistung den jeweiligen anzutreibenden Teilen zugeführt wird.

Zwischen nicht im einzelnen bezeichneten Seitenteilen der Erntemaschine 10, die zu deren Rahmen 12 gehören, ist der Dreschteil 31 und der Abscheideteil 39 vorgesehen, die die Körner von dem Stroh und dem Kaff des geernteten Guts trennen. Das Fördergehäuse 24 führt das geerntete Gut, also insbesondere Getreide, Sonnenblumen und Raps dem Dreschteil 31 zu, der von einer rotierenden und sich quer zur Längsachse der Erntemaschine 10 erstreckenden Dreschtrommel 32 und einem in gleicher Weise ausgerichteten Dreschkorb 34 gebildet wird, durch den die Körner und das Kaff auf einen Staffelboden 36 und die Halme, sowie nicht abgeschiedene Körner einer Wendetrommel 38 aufgegeben werden.

Nach dem Dreschvorgang werden die Halme und die darin verbleibenden Körner einem Abscheideteil 39, dessen Hauptbestandteile Strohschüttler 40 und ein Siebkasten 48 sind, aufgegeben. Von der Wendetrommel 38 wird das Gut den oszillierenden Strohschüttlern 40 zugeworfen, die es zu dem rückwärtigen Ende der Erntemaschine 10 befördern, wo es mittels eines Strohstreuers 44 auf den Boden abgelegt wird. Körner und Kaff, die durch die Strohschüttler 40 ausgelöst werden, fallen auf eine geneigte Wanne 46, die sie dem Staffelboden 36 zufördert. Der gesamte Strom der Körner und des Kaffs wird mittels nicht gezeigter Schnecken dem Siebkasten 48 aufgegeben, der der Abscheidung des Kaffs von den Körnern dient. Die Körner und das Kaff werden auf dem Weg zu einem innerhalb des Siebkastens 48 gelegenen Kurzstroh- und einem Körnersieb durch einen Luftstrom eines Gebläses 50 geführt, der das leichtere Kaff dem rückwärtigen Ende der Erntemaschine 10 zubläst, während die schwereren Körner durch ein Körnersieb einer Körnerschnecke 52 zufallen.

Die Körnerschnecke 52 befördert die gereinigten Körner zu einem nicht gezeigten Körnerelevator, über den sie wiederum zu dem Korntank 26 gelangen. Noch nicht ausgedroschene Gutbestandteile, z. B. Ährenhälften, fallen einer Überkehrschnecke 54 zu, die sie zurück zu der Dreschtrommel 32 und dem

4

Dreschkorb 34 bringt. Zum Entladen des Korntanks 26 sind in seinem Inneren zwei Querförderschnecken 56 und eine nicht gezeigte, von diesen beschickbare und vertikal verlaufende Schnecke vorgesehen, die die Körner einem Entleerrohr 58 aufgibt.

Das Antriebssystem zum Antreiben all der vorgenannten Komponenten ist in der US-A-4,843,803 vom 12. Mai 1988 beschrieben, deren Inhalt hiermit ebenfalls in die Offenbarung mit einbezogen ist.

Es wird darauf hingewiesen, daß die Erntemaschine 10 ebenso mit einer anderen Erntebergungsvorrichtung 22 ausgerüstet werden kann, z. B. mit einer Pick-Up, wie sie in der US-A-4, 567,719 beschrieben ist; gleichermaßen kann ein Maisgebiß oder ein Maispflücker gemäß den US-A-3,982,384 und US-A-3,759,021 angebaut werden. Der Inhalt der vorgenannten Schutzrechte soll ausdrücklich als in die Offenbarung dieser Patentanmeldung mit einbezogen gelten. Darüber hinaus kommen auch Rapsschneidwerke, Sonnenblumenaufnehmer und dergleichen als Erntebergungsvorrichtungen in Betracht.

Antriebssystem der Erntekomponenten

Die Beschreibung der vorliegenden Erfindung geht aus von der Regelung der Drehgeschwindigkeit einer Haspel eines Schneidwerks oder der Regelung der Drehgeschwindigkeit der Pflückwalzen eines Maispflückers. Jedoch kann die Erfindung auch im Zusammenhang mit einer Pick-Up oder den Zuführriemen eines Maisgebisses verwendet werden. Der Begriff "Haspel" umfaßt darüber hinaus alle diesbezüglich bekannten Bauarten, wie Latten- oder Zinkenhaspel. Schließlich sei darauf hingewiesen, daß es auch andere Erntemaschinen gibt, bei denen die Geschwindigkeit der Aufnahmeeinrichtung in Abhängigkeit zu der Fortbewegungsgeschwindigkeit stehen und somit bei deren Änderung ebenfalls angepaßt werden soll. Solche Erntemaschinen können z. B. Baumwoll- oder Erbsenpflücker oder Rübenaufnehmer sein.

Die Aufnahmeeinrichtung 23 wird mittels eines Hydraulikmotors 60 angetrieben, den eine Flüssigkeitssäule mit einer Hydraulikpumpe 61 verbindet. Aus Figur 2 geht hervor, daß der Verbrennungsmotor 28 eine Haupthydraulikpumpe 62 antreibt, die über eine Flüssigkeitssäule mit dem Hydraulikmotor 18 in Verbindung steht und diesen antreibt, und der wiederum mit dem Getriebe 19 antriebsmäßig verbunden ist. Das Getriebe 19 ist zum Übertragen einer Antriebsleistung mit Endantrieben 64 verbunden, über die die vorderen Räder 14 in Drehung versetzt werden.

Die Hydraulikpumpe 61 wird über den Antrieb der gesamten Erntebergungsvorrichtung 22 angetrieben, so daß sie nur dann in Betrieb ist, wenn die Erntebergungsvorrichtung 22 arbeitet. Von der Hydraulikpumpe 61 unter Druck gesetzte und geförderte Flüssigkeit wird einem als Regelventil ausgebildeten Ventil 70 zugeleitet, bevor sie dem Hydraulikmotor 60 zufließt. Das Ventil 70 ist ein Dosierventil, dessen Dosierung, d. h. die Größe des durch es fließenden Flüssigkeitsstroms, von einem Getriebemotor 74 mit einem Dauergleichstrommagneten gesteuert wird. Der Getriebemotor 72 kann sowohl in der Vorwärts- wie auch in der Rückwärtsrichtung betrieben werden, indem die Polarität der dem Getriebemotor 72 zugeführten Elektroenergie umgekehrt wird.

Die Bedienungsperson hat Zugriff zu einem Schalter 73, um den Getriebemotor 72 und über diesen das Ventil 70 elektrisch zu verstellen. Der Schalter 73 kehrt stets in eine Neutralstellung zurück, sobald er sich außerhalb der Neutralstellung befindet und losgelassen wird, so daß er in der Neutralstellung den Getriebemotor 72 von der Zufuhr elektrischer Energie trennt. Die Geschwindigkeit des Hydraulikmotors 60 wird geregelt über die Menge der Hydraulikflüssigkeit, die ihm über das Ventil 70 zugeführt wird. Die Bedienungsperson kann mittels des Schalters 73 wahlweise, also manuell das Ventil 70 verstellen und somit die Geschwindigkeit der Aufnahmeeinrichtung 23 verändern.

In Figur 2 sind auch eine Magnetregelventilsteuerung 143 und Magnetventile 150 aufgezeigt, die dazu verwendet werden, die Stellung verstellbarer Scheiben zum Verändern der Geschwindigkeit des Fördergehäuses 24 zu verändern. Die verstellbaren Scheiben sind Teil eines nicht gezeigten Verstellvariators. Eine angetriebene Scheibe des Fördergehäuses 24 treibt die Pflückwalzen und somit die Geschwindigkeit der Pflückvorrichtungen. Der wirksame Durchmesser der variablen Scheiben wird mittels hydraulischer Verstellmotoren eingestellt, die an eine Druckquelle angeschlossen sind. Die Magnetventile 150 regulieren den Flüssigkeitsstrom zu diesen Verstellmotoren und somit den wirksamen Durchmesser der Verstellscheiben.

Automatisches Regelsystem

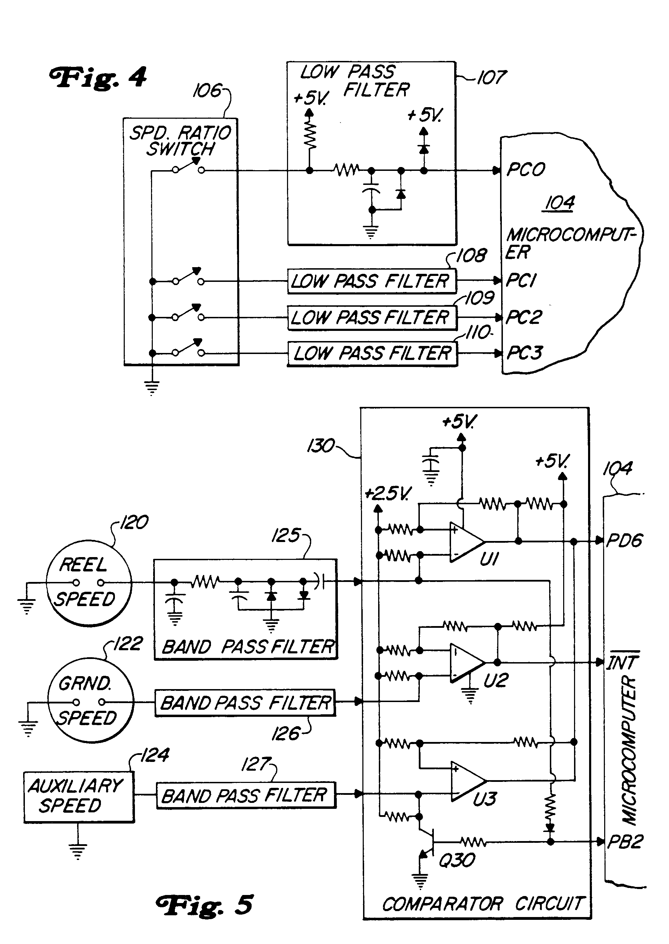

Bei der vorliegenden Erfindung kann der Getriebemotor 72 die Geschwindigkeit der Aufnahmeeinrichtung 23 auch mittels eines elektronischen Reglers 100 bestimmt werden, dem eine Eingabe zu dem Aufnahmegeschwindigkeitsverhältnis von einem Verhältnisschalter 106 aus eingegeben wird. Der automatisch arbeitende Regler 100 enthält einen Mikrocomputer 104, z. B. einen Motorola Microcomputer 6805R3, der von Fa. Motorola Corporation of Schaumberg, Illinois, bezogen werden kann. Der Microcomputer 104 wird seitens der Bedienungsperson mit einer Eingabe gefüttert, die angibt, welches Verhältnis zwischen der Antriebsgeschwindigkeit der Aufnahmeeinrichtung 23 oder der Pflückwalzen und der Fortbewegungsgeschwindigkeit der Erntemaschine 10 gewählt sein soll. Die Eingabeeinheit für die Bedienungsperson enthält den Verhältnisschalter 106, der durch Tiefpaßfilter 107, 108, 109 und 110 mit Anschlüssen PC0, PC1, PC2 und PC3 an dem Microcomputer 104 in elektrischer Verbindung steht. Figur 4 ist zu entnehmen, daß der Verhältnisschalter 106 einen binärcodierten Schalter enthält, der bis zu 16 verschiedene Ausgänge (4x4) an den Microcomputer 104 liefern kann. Ein derartiger binärcodierter Schalter kann von Fa. Standard Grigsby, in Aurora, Illinois, unter der Ersatzteilnummer 8714 bezogen werden. Figur 4 zeigt auch den elektrischen Schaltplan des Tiefpaßfilters 107, der identisch ist mit denen der Tiefpaßfilter 108, 109 und 110.

Dem Microcomputer 104 werden auch Signale von verschiedenen Geschwindigkeitssensoren, die an der Erntemaschine 10 angebracht sind, zugeführt. Diese Geschwindigkeitssensoren enthalten einen Geschwindigkeitssensor 120 für die Haspel, einen Geschwindigkeitssensor 122 für die Fortbewegungsgeschwindigkeit und einen zusätzlichen Geschwindigkeitssensor 124. Alle diese Geschwindigkeitssensoren 120, 122, 124 können einen Magnetsensor der Art enthalten, wie er von Fa. Wabash Magnetics in Wabash, Indiana, USA, angeboten wird. Die Signale, die von jedem dieser Geschwindigkeitssensoren 120, 122, 124 ausgehen, werden durch Bandpaßfilter 125, 126 und 127 geleitet, die einen Amplitudenbegrenzer zum Schutz des Microcomputers 104 enthalten. Derartige Bandpaßfilter 125, 126 und 127 werden benutzt, um elektromagnetische Interferenzen heraus zu filtern. Der spezielle Schaltkreis des Bandpaßfilters 125 und des dazugehörigen Amplitudenbegrenzers ist in Figur 5 dargestellt und ist identisch mit dem der Bandpaßfilter 126 und 127. Der Ausgang der Bandpaßfilter 125, 126 und 127 führt zu einem Vergleicherkreis 130, um einen Rechteckwellenausgang für die Anschlüsse PD6 und INT des Microcomputers 104 zu erzeugen. Der Anschluß PB2 bildet einen Regeleingang für einen Widerstand Q30. Der Elektroschaltplan des Vergleicherkreises 130 ist ebenfalls in Figur 5 widergegeben.

Der Vergleicherkreis 130 enthält drei Vergleicher U1, U2 und U3. Der umgekehrte Eingang der Vergleicher U1, U2 und U3 ist dementsprechend elektrisch mit den Geschwindigkeitssensoren 120, 122 und 124 für die Haspelgeschwindigkeit, die Fortbewegungsgeschwindigkeit und die zusätzliche Geschwindigkeit verbunden. Der nicht-umgekehrte Eingang jedes Vergleichers U1, U2 und U3 ist elektrisch mit einer 2,5-Volt-Gleichstromspannungsquelle eines Kraftkonditionierapparates verbunden. Die Ausgänge der Vergleicher U1 und U3 sind elektrisch an den Anschluß PD6 des Microcomputers 104 angeschlossen, während der Ausgang des Vergleichers U2 an den INT-Anschluß des Microcomputers 104 angelegt ist. Der Widerstand Q30 dient dazu, zwischen den Ausgängen der Vergleicher U1 und U3 zu wählen. Im Einzelnen bedeutet dies, daß als Reaktion darauf, daß ein Maispflücker an die Erntemaschine 10 angebaut ist, ein Aufnahmegeräteschalter 144 an Masse gelegt ist, daß der Microcomputer 104 über den Anschluß PB2 ein Regelsignal zu dem Widerstand Q30 sendet, der den umgekehrten Eingang entweder des Vergleichers U1 oder des Vergleichers U3 erdet. Somit ist der Geschwindigkeitseingang der gewählten Erntebergungsvorrichtung 22 immer an den Anschluß PD6 angelegt.

Der Geschwindigkeitssensor 122 für die Fortbewegungsgeschwindigkeit ist funktionsmäßig verbunden mit dem Getriebe 19, um ein der Ausgangsgeschwindigkeit des Getriebes 19 entsprechendes Signal zu erhalten, von dem das entsprechende Signal der Fortbewegungsgeschwindigkeit abgeleitet werden kann. Jedoch könnte der Geschwindigkeitssensor 122 auch an dem Endantrieb 64 oder an den Räder 14, 16 angebracht sein. Der Geschwindigkeitssensor 120 ist funktionsmäßig an die Aufnahmeeinrichtung 23 angeschlossen, um ein Aufnahmegeschwindigkeitssignal zu erzeugen, und der zusätzliche Geschwindigkeitssensor 124 ist funktionell mit dem Fördergehäuse 24 verbunden.

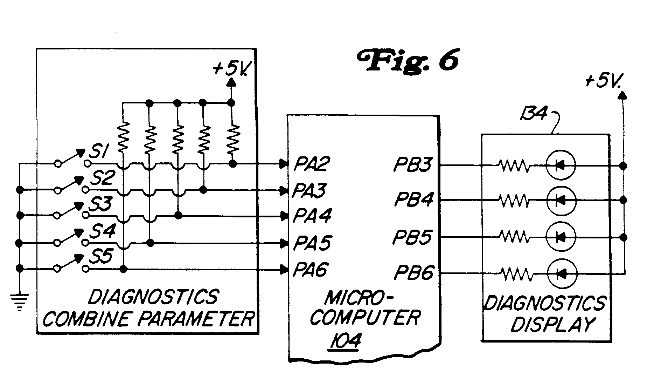

Das automatische Regelsystem ist dann noch mit einer dritten Eingabequelle versehen, die einen Teil für eine Diagnose und für die Eingabe von Parametern der Erntemaschine 10 Parameterschalter 132 enthält. Genauer gesagt, ist gemäß Figur 6 ein Schalter S1 zum Auslösen eines Diagnose-Verfahrens des Softwareprogramms vorgesehen, während mit Schalter S2-S4 die verschiedenen Betriebsparameter der Erntemaschine 10 eingestellt werden; der Schalter S5 ist zur Reserve vorgesehen. Die Schalter S2-S4 dienen der Eingabe der Reifengröße der Erntemaschine 10 und des Übersetzungsverhältnisses der Endantriebe 64, um den Microcomputer 104 genau der jeweiligen speziellen Ausbildung der Erntemaschine 10 anzupassen, so daß die Fortbewegungsgeschwindigkeit genau ermittelt werden kann. Die Eingänge dieser Eingangseinheit werden an die Anschlüsse PA2, PA3, PA4, PA5 und PA6 des Microcomputers 104 angelegt.

Der automatische Regler 100 ist auch mit einer Diagnoseanzeige 134 versehen, die gemäß Figur 6 vier Leuchtanzeigen (LED's) enthält. Diese Leuchtanzeigen können sechzehn (4x4) potentielle Probleme angeben, und zwar durch die jeweilige Kombination, in der sie gemeinsam aufleuchten oder dunkel bleiben. Ein Mechaniker, der das automatische Regelsystem überprüft, würde den Schalter S1 betätigen, um den Diagnoselauf des Softwareprogramms auszulösen, die Erntemaschine 10 mit einer bestimmten Geschwindigkeit fahren, während die mit "DGNSET" bezeichnete Unterschleife der Software die Betriebseinrichtungen überprüft. Der Mechaniker würde dann die Diagnoseanzeige 134, die von der mit "DIADSP" bezeichneten Unterschleife gespeist wird, überprüfen, um die Leuchtanzeigenkombination zu erfassen. Der Mechaniker könnte schließlich diese Leuchtanzeigenkombination in einem Werkstatthandbuch nachsehen, um festzustellen, ob und welcher Bereich des automatischen Regelsystems weiter geprüft werden muß.

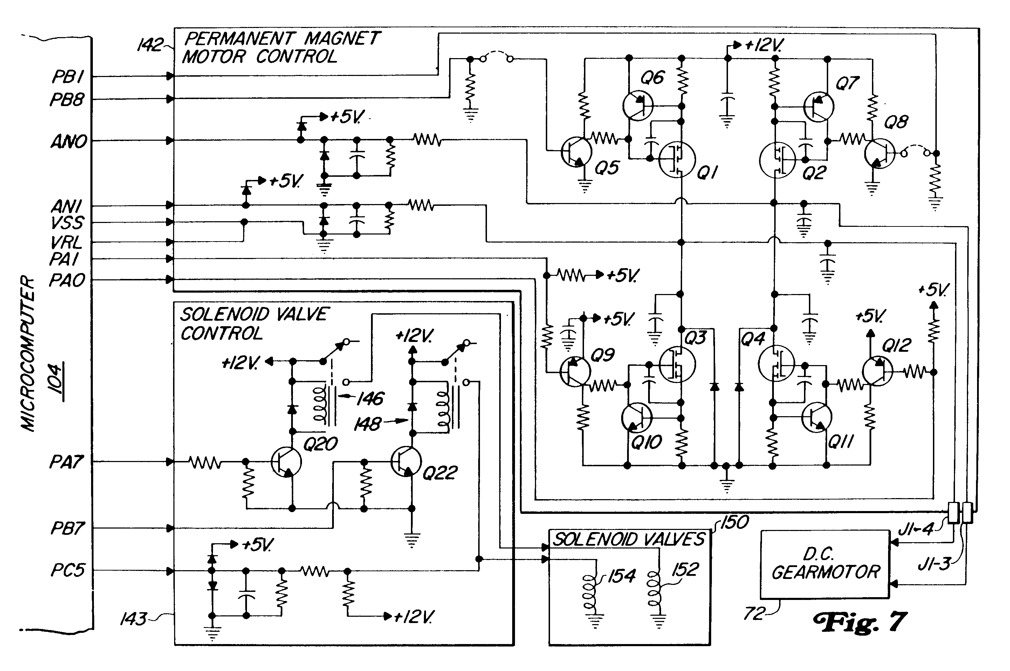

Die Anschlüsse PB1, PB0, AN0, AN1, VSS, VRL, PA1 und PA0 des Microcomputers 104 sind an einen Regelkreis 142 zum Betreiben des als Dauermagnet-Gleichstrommotor ausgebildeten Getriebemotors 72 und somit des Regelventils 70 angelegt. Der Getriebemotor 72 ist elektrisch mit der Regelung 142 über die Steckdosen JI-3 und JI-4 verbunden. Die Regelung 142 ist ausführlicher in Figur 7 beschrieben und enthält im wesentlichen vier Feldeffekttransistoren (FET) Q1, Q2, Q3 und Q4, die über vier Transistorenpaare Q5 und Q6, Q7 und Q8, Q9 und Q10 und Q11 und Q12 von den Ausgängen der Anschlüsse PB1, PB8, PA1 und PA0 gesteuert, bzw. geschaltet werden. Jedes der Transistorenpaare ist einem der Feldeffekttransistoren zugeordnet. Im einzelnen werden die Feldeffekttransistoren Q1 und Q4 benutzt, um den Getriebemotor 72 in einer ersten Richtung anzutreiben, während die Feldeffekttransistoren Q2 und Q3 benutzt werden, um den Getriebemotor 72 in der anderen Richtung anzutreiben. Wenn Q1 geschaltet ist, schaltet er einen Durchlaß von der 12-Volt-Gleichstromquelle zu dem Getriebemotor 72 und Q4 ist gleichzeitig geschaltet und gewährt einen Durchlaß von dem Getriebemotor 72 zur Masse. In gleicher Weise verbindet Q2, nachdem er geschaltet ist, den Getriebemotor 72 elektrisch mit der 12-Volt-Gleichstromquelle, und Q3 ermöglicht einen Durchlaß für eine elektrische Verbindung zwischen dem Getriebemotor 72 und der Masse. Auf diese Weise steuert der Microcomputer 104 die Richtung des Getriebemotors 72.

Der Microcomputer 104 ermittelt die elektrische Spannung, die dem Getriebemotor 72 zugeführt wird, durch Analog-Eingangsanschlüsse AN0 und AN1. Wenn der Getriebemotor 72 von einer Bedienungsperson über den Schalter 73 manuell verstellt wird, wird demnach der Microcomputer 104 den Getriebemotor 72 nicht antreiben und warten, bis die Bedienungsperson den Getriebemotor 72 nicht mehr länger betätigt und der Schalter 73 in seine Neutralstellung zurückgekehrt ist. Zusätzlich dazu, daß erkannt wird, daß eine Bedienungsperson den Getriebemotor 72 betätigt, erkennen die Anschlüsse AN0 und AN1 auch, wenn die Stromführungsleitungen zu dem Getriebemotor 72 einen Kurzschluß aufweisen. Wird ein solcher Kurzschluß festgestellt, unterbleibt ein Antrieb des Getriebemotors 72 durch den Microcomputer 104, bis der Kurzschluß beseitigt ist.

Der Getriebemotor 72 selbst enthält einen Permanentmagnetmotor und sollte mit einem Grenzschalter versehen sein, wie er z. B. bei Fa. Riverside Electronics aus Lewiston, Minnesota, USA, erhältlich ist. Der Grenzschalter hält den Getriebemotor 72 bei 0- und 180°-Drehung an, um einen Schaden an dem Ventil 70 infolge des Getriebemotors 72 zu verhindern.

Wie bereits zuvor erwähnt wurde, kann die vorliegende Erfindung benutzt werden, um eine Aufnahmeeinrichtung 23 oder eine Pick-Up an einem Getreidevorsatz anzutreiben, aber es soll nochmals darauf hingewiesen werden, daß sie auch zum Antreiben eines Maisgebisses oder eines Maispflückers oder dergleichen an derselben oder einer anderen Art von Erntemaschinen verwendet werden kann. In einem derartigen Fall wird ein Zusatzsystem mittels eines Anbaugeräteschalters 144 geschaltet, der mittels eines elektrischen Kupplungsanschlusses PB7 des Microcomputers 104 durch geeignete elektrische Anschlüsse betätigt wird. Der Anbaugeräteschalter 144 kann in den mechanischen Anhängezusammenbau des Maisgebisses und/oder des Maispflückers integriert sein, so daß, sobald das Maisgebiß oder der Maispflücker angebaut sind, der Anschluß PD7 an Masse angelegt wird.

Der zusätzliche Geschwindigkeitssensor 124 würde in dem Fördergehäuse 24 untergebracht werden und in einer Art arbeiten, die dem Geschwindigkeitssensor 120 für die Aufnahmeeinrichtung 23 entspricht, so daß er ein Eingangssignal durch den Bandpaßfilter 127 zu dem Vergleicherkreis 130 und dem Microcomputer 104 schickt. Der Microcomputer 104 würde durch die Anschlüsse PA7, PB7 und PC5 ein Ausgangssignal zu der Magnetregelventilsteuerung 143 schicken, dessen Schaltplan in Figur 7 wiedergegeben ist. Diese Magnetregelventilsteuerung 143 enthält zwei Relais 146 und 148 zum Schalten zweier Magnetventile. Die Relais 146 und 148 werden von zwei Transistoren Q20 und Q22 geschaltet und werden benutzt, um die beiden Magnetspulen 152 und 154 zu steuern. Der Microcomputer 104 steuert über den Anschluß PC5 die Erregung der Magnetspule 154. Wenn die Magnetspule 152 erregt ist, wird die Geschwindigkeit an der Erntebergungsvorrichtung 22 verringert; jedoch, wenn beide Magnetspulen 152, 154 erregt sind, erhöht sie sich. Die Magnetventile 150 werden benutzt, um den wirksamen Durchmesser der verstellbaren Scheiben zu verändern, die dem Antrieb des Fördergehäuses 24 und dem Maisgebiß, dem Maispflücker oder einem anderen Vorsatz dienen.

Der Microcomputer 104 ist über den Anschluß PC4 elektrisch mit einem Schalter 140 für den Hub der Erntebergungsvorrichtung 22 verbunden. Als Reaktion darauf, daß die Erntebergungsvorrichtung 22 angehoben worden ist, gibt der Schalter 140 dem Microcomputer 104 ein Signal, der selbst wiederum die

7

Magnetventile 150 am Öffnen hindert. Dadurch wird eine Überlastung der Haupthydraulikpumpe 62 vermieden, die Hydraulikflüssigkeit sowohl dem Hubkreis der Erntebergungsvorrichtung 22 als auch zu den Magnetventilen 150 zuleitet.

Es wird darauf hingewiesen, daß die vorliegende automatische Regelvorrichtung die Fortbewegungsgeschwindigkeit der Erntemaschine 10, wie auch eine evtl. gegebene Ausgangsgeschwindigkeit der Erntebergungsvorrichtung 22 erfaßt. Daraufhin stellt sie als Reaktion auf das von der Bedienungsperson eingegebene Geschwindigkeitsverhältnis oder der Betätigung eines Schalters die Geschwindigkeit, d. h. die Aufnahmegeschwindigkeit der Erntebergungsvorrichtung 22 gemäß dem gewünschten Verhältnis zu der Fortbewegungsgeschwindigkeit ein. Es sei nochmals darauf hingewiesen, daß die Erntebergungsvorrichtung 22, insbesondere ein Schneidwerk mit einer Aufnahmeeinrichtung 23 , eine Pick-Up, ein Maisgebiß oder ein Maispflücker sein kann. Die Software zum Erfüllen dieser Regelaufgabe, die in einem Speicher (ROM) des Microcomputers 104 programmiert ist, wird im folgenden näher erläutert.

Software

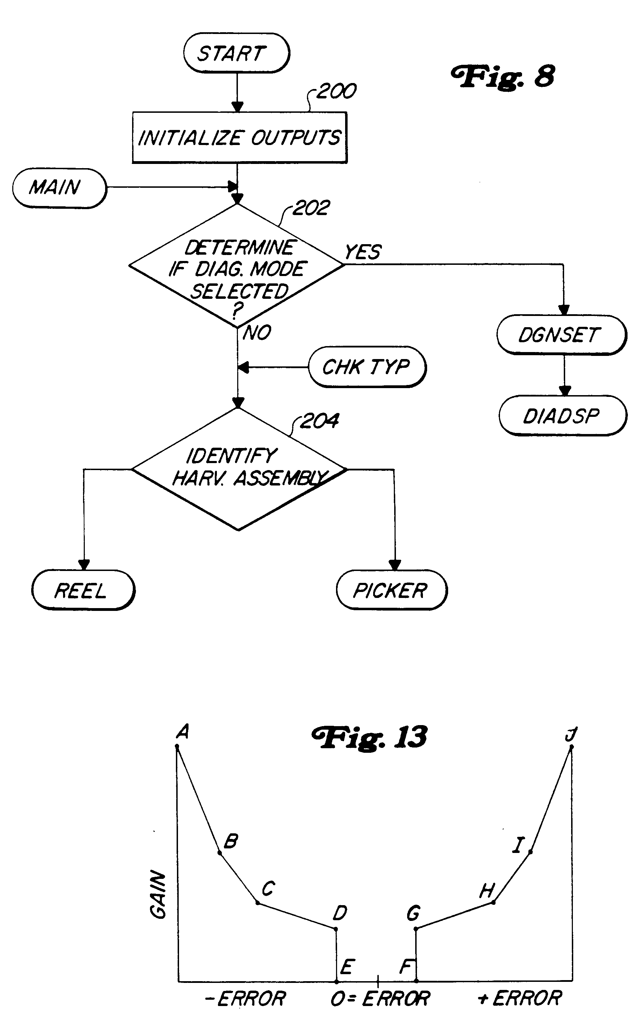

Die in dem Microcomputer 104 gespeicherte Software ist in den vereinfachten Programmablaufplänen der Figuren 8 - 12 veranschaulicht.

Die automatische Regeleinrichtung wird betätigt durch das Starten der Erntemaschine 10 und das Betätigen des Verhältnisschalters 106 bis zum Erreichen des gewünschten Geschwindigkeitsverhältnisses. Dieser Vorgang beginnt in dem Programmablaufplan gemäß Figur 8 bei dem Schritt 200 (Ausgänge auf den Anfang setzen), indem der Microcomputer 104 Ausgänge auf den Anfang setzt, seinen RAM-Speicher entleert und beginnt, verschiedene Eingänge zu erfassen. Als nächstes fragt der Microcomputer 104 in dem Schritt 202 (ermitteln, ob der Diagnose-Modus gewählt ist) den Schalter S1 des Parameterschalters 132 ab.

Ist dieser Parameterschalter 132 betätigt, läuft in dem automatischen Regelsystem die Diagnoseschleife ab; ist dieser Parameterschalter 132 nicht betätigt, fährt das Programm zu der Entscheidung, ob die Haspelschleife oder die Pflückerschleife gewählt wird, zu dem Schritt 204 (Erkenne die Erntebergungsvorrichtung) fort. In dem Schritt 204 erforscht der Microcomputer 104 den Zustand des Anbaugeräteschalters 144. Wenn dieser Anbaugeräteschalter 144 betätigt ist, fährt der Microcomputer 104 mit der Programmschleife für einen Pflücker fort, ist er nicht betätigt, fährt er mit der Programmschleife für die als Haspel ausgebildete Aufnahmeeinrichtung 23 fort.

Programmschleife für die Haspel

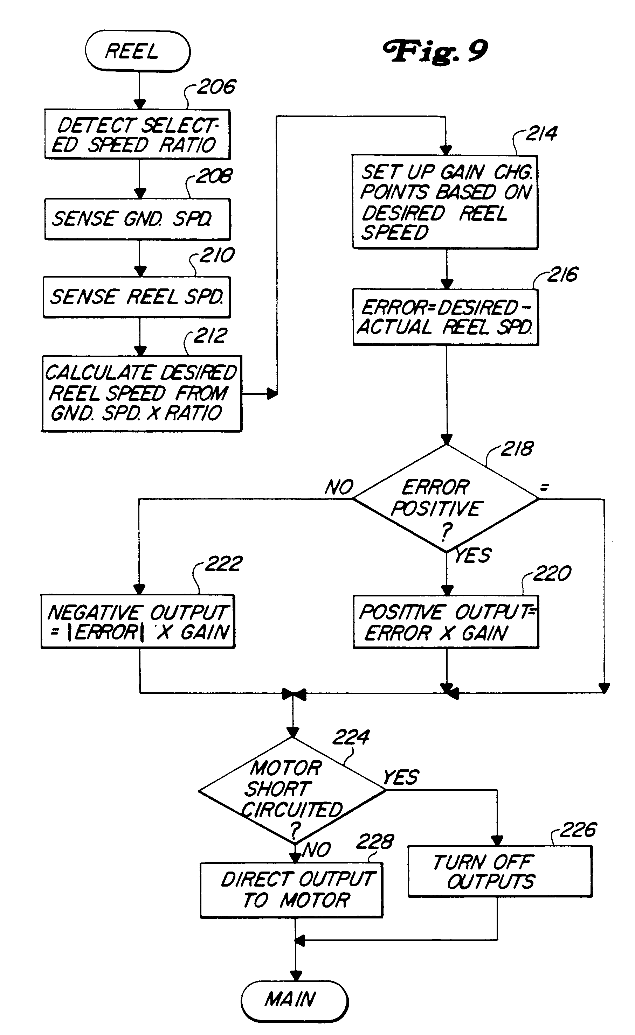

In der Programmschleife für die Haspel (REEL), sh. Figur 9, entdeckt der Microcomputer 104 bereits zu Beginn in Schritt 206 (Ermittle das gewählte Geschwindigkeitsverhältnis) das gewählte Geschwindigkeitsverhältnis, das von der Bedienungsperson über den Verhältnisschalter 106 eingegeben worden ist. In dem Schritt 208 (Ermittle die Fortbewegungsgeschwindigkeit) empfängt der Microcomputer 104 das Signal, das der Größe der Fortbewegungsgeschwindigkeit entspricht und von dem Geschwindigkeitssensor 122 ausgesandt wird und errechnet die Fortbewegungsgeschwindigkeit anhand der Parameter der Erntemaschine 10, die über die Schalter S2-S4 eingegeben worden sind. In dem Schritt 210 (Ermittle die Haspelgeschwindigkeit) erfaßt der Microcomputer 104 die Geschwindigkeit der Aufnahmeeinrichtung 23 aufgrund des Signals über die Haspelgeschwindigkeit, das von dem Geschwindigkeitssensor 120 abgegeben wird. Aus diesen Eingängen errechnet der Microcomputer 104 in Schritt 212 (Errechne die gewünschte Haspelgeschwindigkeit aus Fortbewegungsgeschwindigkeit X Geschwindigkeitsverhältnis) die gewünschte Haspelgeschwindigkeit, in dem er die Fortbewegungsgeschwindigkeit mit dem Geschwindigkeitsverhältnis multipliziert.

Basierend auf der errechneten gewünschten Haspelgeschwindigkeit setzt der Microcomputer 104 in Schritt 214 (Setze Verstärkungsänderungspunkte basierend auf der gewünschten Haspelgeschwindigkeit) anhand einer gespeicherten Tabelle Verstärkungsänderungspunkte A-J gemäß Figur 13. Die in Figur 13 dargestellte Kurve ist eine graphische Widergabe der Verstärkungsänderungspunkte und gibt den Weg an, aufgrund dessen der Microcomputer 104 die Aufnahmeeinrichtung 23 beschleunigt oder verlangsamt, um die gewünschte Haspelgeschwindigkeit zu erreichen.

Der Microcomputer 104 errechnet dann in Schritt 216 (Fehler = Gewünschte - Gegebene Haspelgeschwindigkeit) ein Fehlersignal, indem er die gewünschte und die vorhandene Haspelgeschwindigkeit voneinander abzieht. Abhängig davon, ob das Fehlersignal positiv, negativ oder gleich ist, was in Schritt 218 (Fehlersignal positiv?) abgefragt wird, bestimmt es, ob die Feldeffekttransistoren (FET) Q1 und Q4 oder Q2 und Q3 von dem Microcomputer 104 geschaltet werden. In den Schritten 220 (Positives Ausgangssignal = Fehlersignal X Verstärkung) und 222 (Negatives Ausgangssignal = Betrag des Fehlersignals X Verstärkung) errechnet der Microcomputer 104 die Größe des elektrischen Signals, das dem Getriebemotor 72 zugeführt werden soll. Diese Größe des Signals wird ermittelt durch eine Multiplikation des absoluten Betrages des Fehlersignals mit der Verstärkung, wie es durch Figur 13 festgelegt ist. Daher kann das erforderliche elektrische Signal von der vertikalen Achse in Figur 13 aus errechnet werden.

Bevor das Steuersignal für den Getriebemotor 72 an diesen angelegt werden kann, prüft der Microcomputer 104 in Schritt 224 (Motorkurzschluß?) an den analogen Anschlüssen AN0 und AN1, ob der Getriebemotor 72 manuell gesteuert wird oder einen Kurzschluß aufweist. Wenn der Getriebemotor 72 in Ordnung ist, wird das Ausgangssteuersignal in Schritt 228 (Direkter Ausgang zu dem Motor) diesem zugeführt, um das Ventil 70 zu betreiben.

Wenn der Getriebemotor 72 einen Kurzschluß aufweist oder manuell bedient wird, werden die Ausgänge von AN0 und AN1 von dem Anschluß 226 abgeschaltet. Der Microcomputer 104 kehrt dann wieder zu dem Anfang des Programms bei MAIN zurück und bringt den Prozeß ständig auf den neuesten Stand.

Die in Figur 13 gezeigte Kurve ist in einer Tabelle in dem Speicher des Microcomputers 104 hinterlegt. Jedoch kann diese Kurve auch mittels einer vielgliedrigen (polynomen) Gleichung bestimmt werden, um ein sich ständig änderndes Antwortmuster zu erhalten. Aus Gründen der Einfachheit wurde jedoch die aus der Tabelle gewonnene Kurve gewählt, die linear zwischen benachbarten Verstärkungsänderungspunkten verläuft. Das Hauptmerkmal der Kurve ist es, daß sie insgesamt nicht-linear ist, und, daß je größer der Betrag des Fehlersignals ist, desto größer die Signalerwiderung ist. Auf diese Weise wird die Regelvorrichtung schneller zu einem Null-Fehlersignal-Zustand gebracht, in dem die Aufnahmeeinrichtung 23 unter dem richtigen Geschwindigkeitsverhältnis angetrieben wird. Ein Unempfindlichkeitsbereich ist zwischen den beiden Null-Fehlersignal-Zustands-Zonen vorgesehen, innerhalb dessen die Geschwindigkeit der Aufnahmeeinrichtung 23 nicht nachgestellt werden muß.

Es könnte wünschenswert sein, daß die beiderseits des Unempfindlichkeitsbereichs liegenden in Figur 13 gezeigten Kurven nicht die gleiche Neigung besitzen. Denn es ist aufgrund der inneren Trägheit der Aufnahmeeinrichtung 23 einfacher, diese abzubremsen, als sie zu beschleunigen. Daher mag die Verstärkungsneigung zum Beschleunigen der Aufnahmeeinrichtung 23 steiler sein als diejenige zum Abbremsen der Aufnahmeeinrichtung 23.

## Programmschleife für einen Pflücker

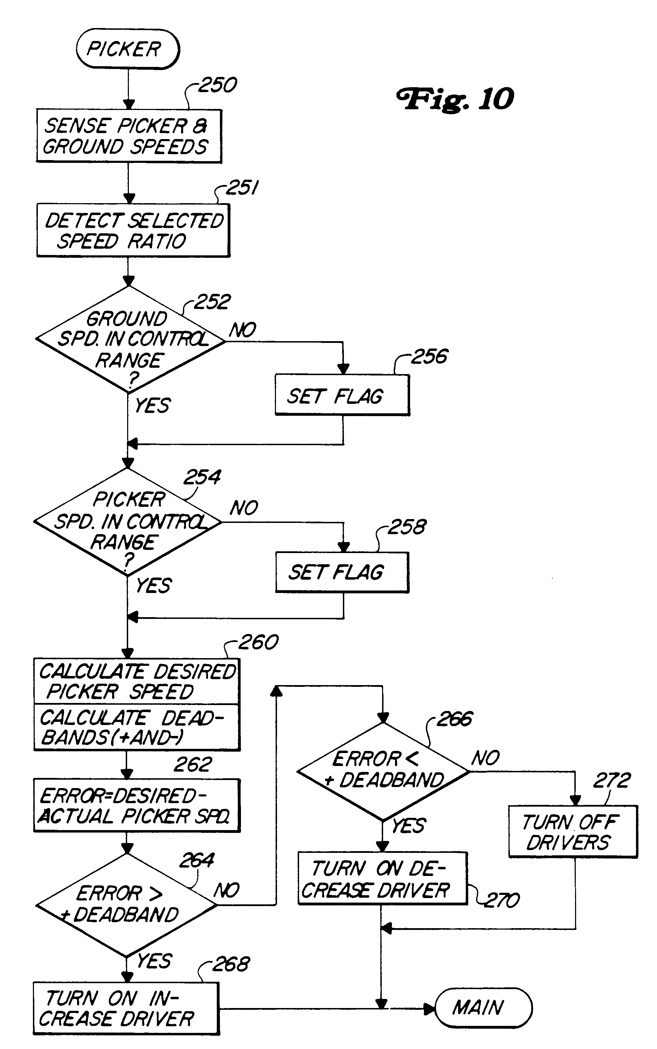

Wenn der Anbaugeräteschalter 144 an Masse gelegt ist (sh. Fig. 10), wird die Programmschleife für einen Pflücker gestartet. Der Microcomputer 104 wird in Schritt 250 (Erfasse Pflück- und Fortbewegungsgeschwindigkeit) angewiesen, die Pflückgeschwindigkeit und die Fortbewegungsgeschwindigkeit zu ermitteln. Bei Schritt 251 (Erfasse das gewünschte Geschwindigkeitsverhältnis) erfaßt der Microcomputer 104 das gewählte Geschwindigkeitsverhältnis an dem Verhältnisschalter 106. Als nächstes wird bei Schritt 252 (Fortbewegungsgeschwindigkeit in Regelbereich?) bzw. Schritt 254 (Pflückgeschwindigkeit in Regelbereich?) herausgefunden, ob die Fortbewegungsgeschwindigkeit und die Pflückgeschwindigkeit in dem richtigen Regelbereich liegen. Ist dies nicht der Fall, werden bei den Schritten 256 (Setze Signal) und 258 (Setze Signal) Diagnosesignale gesetzt, auf die bei der Beschreibung der Programmschleife für die Diagnose Bezug genommen wird. Nachdem bestimmt ist, ob die Fortbewegungs- und die Pflückgeschwindigkeit in dem Regelbereich liegen, ist es erforderlich, in Schritt 260 [Errechne die gewünschte Pflückgeschwindigkeit / Errechne den Unempfindlichkeitsbereich (+ und -)] die gewünschte Pflückgeschwindigkeit aus dem eingegebenen Geschwindigkeitsverhältnis des Verhältnisschalters 106 und der Fortbewegungsgeschwindigkeit zu bilden. Die gewünschte Pflückgeschwindigkeit wird errechnet aus der Multiplikation des gewählten Geschwindigkeitsverhältnisses mit der gegebenen Fortbewegungsgeschwindigkeit. In Schritt 260 wird nach der Errechnung der gewünschten Pflückgeschwindigkeit ein Unempfindlichkeitsbereich auf jeder Seite des Null-Fehlersignal-Bereichs errechnet, um einen annehmbaren Bereich von Fehlerzuständen zu schaffen, innerhalb dessen die Pflückgeschwindigkeit nicht nachgestellt werden muß. Nachdem der Unempfindlichkeitsbereich errechnet ist, wird bei Schritt 262 (Fehlersignal = gewünschte - gegebene Pflückgeschwindigkeit) das Fehlersignal ermittelt, indem die gegebene Pflückgeschwindigkeit von der gewünschten abgezogen wird.

Das errechnete Fehlersignal wird dann bei Schritt 264 (Fehlersignal > positiver Unempfindlichkeitsbereich) verglichen mit dem positiven und bei Schritt 266 (Fehlersignal < positiver Unempfindlichkeitsbereich) mit dem negativen Unempfindlichkeitsbereich, um herauszufinden, ob die Magnetventile 150 verstellt werden müssen. Wenn das errechnete Fehlersignal in den Unempfindlichkeitsbereich fällt, werden die Magnetventile 150 nicht betätigt. Ist jedoch bei Schritt 268 (Schalte den Vergrößerungsantrieb ein) das Fehlersignal größer als der positive Unempfindlichkeitsbereich, werden die Magnetventile 150 betätigt, um die Geschwindigkeit des Antriebs zu erhöhen. Desgleichen werden bei Schritt 270 (Schalte den Verkleinerungsantrieb ein) die Magnetventile 150 betätigt, um den wirksamen Durchmesser der verstellbaren Scheiben zu ändern und somit die Geschwindigkeit des Antriebs herabzusetzen, wenn das Fehlersignal kleiner ist als der negative Unempfindlichkeitsbereich. Nachdem an dem Magnetventil Einstellungen vorgenommen wurden, oder in Schritt 272 (Schalte die Verstellantriebe ab) entschieden wurde, die Magnetventile 150 nicht zu verstellen, kehrt das Programm zu seinem Anfang bei MAIN zurück und bringt den Vorgang somit ständig auf den neuesten Stand.

Programmschleife für die Diagnose (DGNSET/DIADSP)

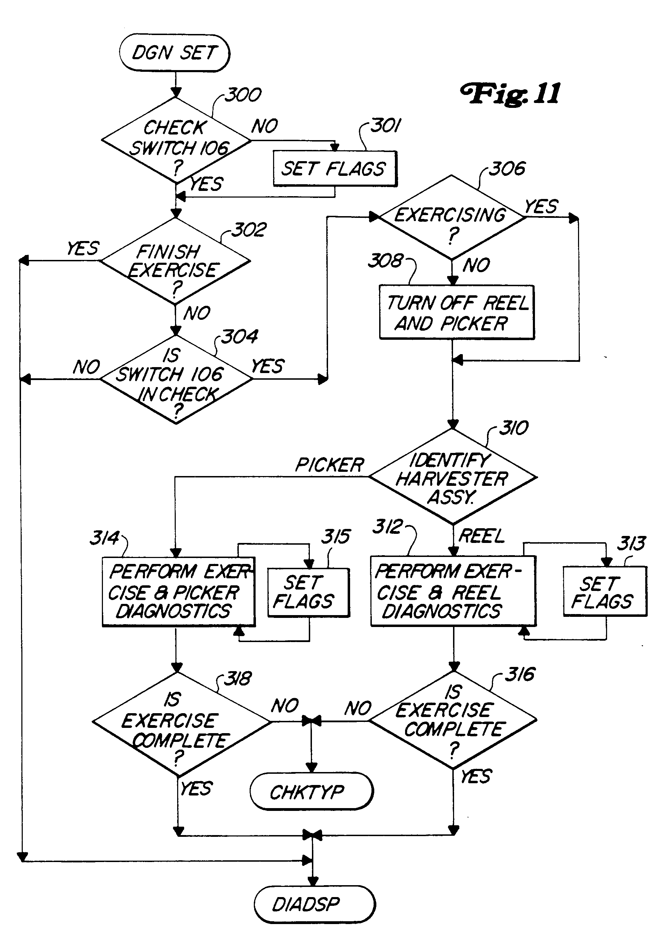

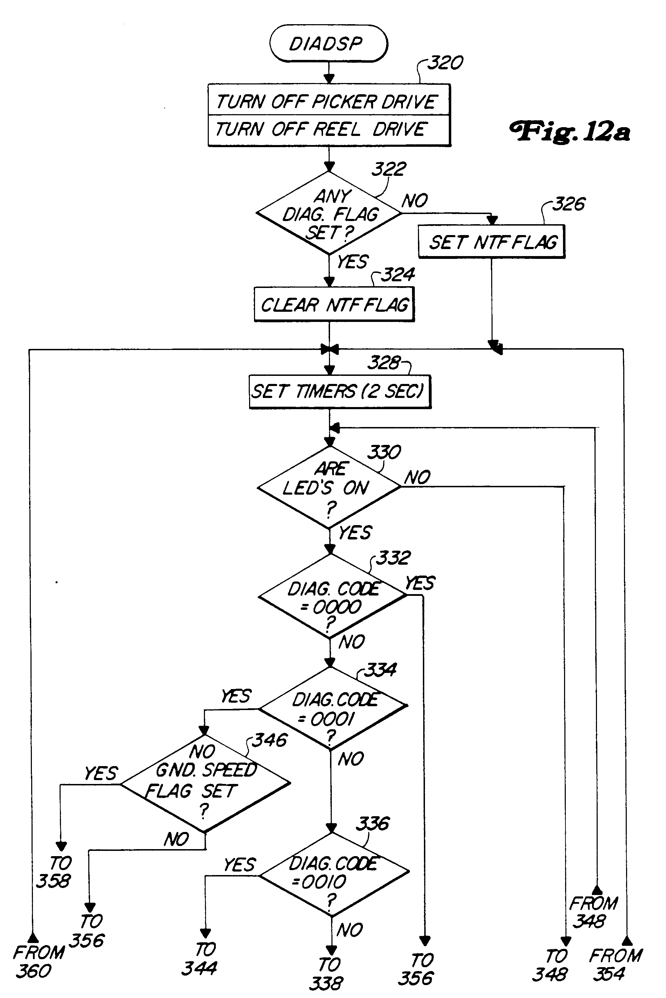

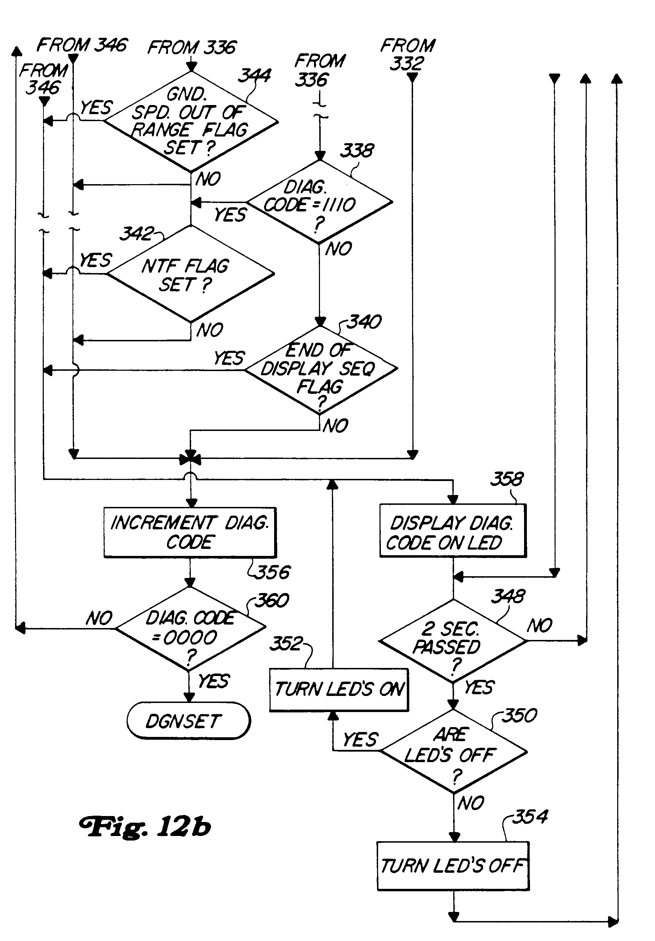

Wenn der Schalter S1 des Parameterschalters 132 geschlossen ist, muß ein Diagnoseprogramm, das besser aus den Figuren 11, 12a und 12b hervorgeht, ablaufen, um herauszufinden, ob die Regelvorrichtung richtig funktioniert.

Ein Wartungsmechaniker bringt zuerst den Schalter S1 des Diagnose- und Parameterschalters 132 in die -EIN-Stellung und setzt die Erntemaschine 10 in Betrieb.

Der Mechaniker prüft, um zu sehen, daß der Verhältnisschalter 106 in die -AUS-Stellung gebracht ist und fährt fort, die Erntemaschine 10 in einer bestimmten, im Werkstatthandbuch angegebenen Geschwindigkeit zu fahren. In diesem Zeitpunkt schaltet dann der Mechaniker den Verhältnisschalter 106 in eine Prüf-Stellung. In der anfänglichen -AUS-Stellung sind alle Schalter innerhalb des Verhältnisschalters 106 offen. Bei dem Schritt 300 (Prüfe Verhältnisschalter 106) prüft der Microcomputer 104, um herauszufinden, ob einer dieser Schalter offen ist. Wenn ein oder mehrere der Schalter während der -AUS-Einstellung offen sind, werden in dem Schritt 301 (Setze Signale) Diagnosesignale gesetzt.

In dem Schritt 302 (Test beendet?) prüft der Microcomputer 104, ob der DGNSET-Lauf den Test mit den Aufnahmeeinheiten beendet hat. Wenn der DGNSET-Lauf beendet ist, verfährt der Microcomputer 104 zu der DIADSP-Programmschleife; ist der DGNSET-Lauf nicht beendet, verfährt der Microcomputer 104 zu Schritt 304 (Ist der Verhältnisschalter 106 in der Test-Stellung?). In dem Schritt 304 prüft der Microcomputer 104, um herauszufinden, ob sich der Verhältnisschalter 106 in der Test-Stellung befindet. Nimmt er eine Test-Stellung ein, fährt der Microcomputer 104 zu Schritt 306 (Durchführung) weiter; nimmt er keine Test-Stellung ein, gelangt der Microcomputer 104 zu der DIADSP-Programmstelle. Es ist festzuhalten, daß dann, wenn kein Diagnosesignal in Schritt 301 gesetzt worden ist, die DIADSP-Programmunterschleife den Microcomputer 104 zurück zu dem Beginn der DGNSET-Progammstelle bringen würde. Wurden jedoch in Schritt 301 Diagnosesignale gesetzt, dann werden diese bei der DIADSP-Programmunterschleife angezeigt.

Es wird fortgefahren mit dem Schritt 306, der eine Prüfung durchführt, um herauszufinden, ob die Funktion der Aufnahmeeinheiten 23 geprüft wird oder nicht, und zwar durch die DGNSET-Programmunterschleife. Wird diese geprüft, fährt der Microcomputer 104 mit Schritt 310 (Erkenne die Art der Erntebergungsvorrichtung 22) weiter; anderenfalls fährt der Microcomputer 104 zu Schritt 308 (Schalte Haspel und Pflücker ab) weiter, der die Aufnahmeeinheiten abschaltet.

Wie bereits angegeben, gibt der Anbaugeräteschalter 144 an, welche Erntebergungsvorrichtung 22 sich an der Erntemaschine 10 befindet. In dem Schritt 310 fragt der Microcomputer 104 den Anbaugeräteschalter 144, um zu entscheiden, ob bei Schritt 312 (Führe die Ausführungs- und Haspel-Diagnosen durch) die Ausführungsschleife für die Aufnahmeeinrichtung 23 durchlaufen werden soll, oder ob bei Schritt 314 (Führe die Ausführungs- und Pflücker-Diagnosen durch) die Ausführungsschleife für die Pflücker anzuwenden ist. Die Schritte 312 und 314 sind mit Schritten 313 (Setze Signal) bzw. 315 (Setze Signal) versehen, um Signale beim Erscheinen von Problemzonen während der Durchführung der Ausübungsschleifen zu setzen. Es sei darauf hingewiesen, daß die Pflücker-Schleife auch das Geben von Diagnostik-Signalen bei den Schritten 256 (Setze Signal) und 258 (Setze Signal) vorsieht. Die Haspel-Schleife enthält diese Schritte zum Setzen von Diagnostik-Signalen nicht, sondern vertraut auf Schritt 312 zum Angeben von Diagnostik-Signalen.

Der automatische Diagnose-Ausführungskreis enthält als Merkmale das Erhöhen der Geschwindigkeit der Aufnahmeeinrichtung 23 oder der Pflückvorrichtungen über eine feste Zeitspanne, dann das Halten der Geschwindigkeit über eine feste Zeitspanne und dann das Verringern der Geschwindigkeit für eine gleiche festgelegte Zeitspanne.

In den Schritten 316 (Ist die Prüfung beendet) und 318 (Ist die Prüfung beendet) prüft der Microcomputer 104, um herauszufinden, ob die Prüfung der Aufnahmeeinheiten beendet ist. Ist dies nicht der Fall, wird die Prüfungsschleife bei der Programmstelle CHKTYP entweder durch die Haspelschleife (REEL) oder die Pflückerschleife (PICKER) geführt. Jedenfalls werden in den Schritten 312 und 413 festgelegte Werte des Verhältnisses zwischen der Aufnahmegeschwindigkeit und der Fortbewegungsgeschwindigkeit aufgerufen, die in einem Speicher hinterlegt sind. Diese Verhältniswerte werden in den Haspel- und Pflückerschleifen (REEL und PICKER) beim Prüfen der Aufnahmeeinheiten verarbeitet. Auf diese Weise werden die normalen Regelschleifen REEL und PICKER zur Steuerung der Prüfung der Aufnahmeeinheiten benutzt.

Nachdem die Diagnose-Unterschleife DIASET durchfahren und beendet ist, wird die Diagnose-Anzeige-Schleife DIADSP gestartet, sh. Fig. 12a. Der Antrieb der Haspel oder der Pflückvorrichtung wird bei Schritt 320 (Schalte den Haspelantrieb ab / Schalte den Pflückerantrieb ab) abgeschaltet, und das Programm ordnet die Diagnose-Signale nach ihrer Priorität und zeigt diese an, wobei der Microcomputer 104 bei Schritt 322 (Irgendein Diagnosesignal gesetzt?) zuerst feststellt, ob ein Diagnosesignal gesetzt ist. Wenn Diagnosesignale gesetzt wurden, wird in Schritt 324 (Lösche das NTF-Signal) das NTF (No Trouble Found, d. h. keinen Fehler gefunden) gelöscht. Wenn keine Diagnostik-Signale gesetzt wurden, wird in Schritt 326 (Setze NTF-Signal) das NTF-Signal gesetzt. Nachdem das NTF-Signal gesetzt oder gelöscht worden ist, fährt der Microcomputer 104 mit dem nächsten Schritt fort, in dem Zeitglieder gesetzt werden. In Schritt 328 [Setze Zeitglied (2 Sec.)] setzt der Microcomputer 104 das Zeitglied für 2 Sekunden.

In dem Schritt 330 (Sind Leuchtanzeigen an?) prüft der Microcomputer 104, ob die Diagnoseanzeige 134 leuchtet. Wenn die Diagnoseanzeige 134 leuchtet, prüft das Programm die verschiedenen Diagnostik-Signale bei den Schritten 332, 334, 336, 338, 340, 342, 344 und 346. Wenn die Diagnoseanzeigen 134 nicht leuchten, fragt das Programm in Schritt 348 (2 Sekunden vorbei?) ab, ob zwei Sekunden bereits verstrichen sind. Wenn bei den Schritten 350 (Sind Diagnoseanzeigen aus?) und 352 (Schalte Diagnoseanzeigen ein) die Diagnoseanzeigen 134 für 2 Sekunden ausgeschaltet sind, werden sie wieder eingeschaltet. Wenn bei den Schritten 350 und 354 (Schalte die Diagnoseanzeigen aus) die Diagnoseanzeigen 134 für 2 Sekunden eingeschaltet sind, werden sie ausgeschaltet. Nachdem die Diagnoseanzeigen 134 eingeschaltet sind, kann das Programm in den Schritten 332 - 346 die Diagnose-Signale, die in der DGNSET-Unterschleife gesetzt wurden, auswerten. Zum Anzeigen der Diagnose-Informationen zeigen die Diagnoseanzeigen 134 die verschiedenen Diagnose-Codes durch Aufleuchten oder Nichtaufleuchten für jeweils 2 Sekunden an. Die zwei-Sekunden-lange Ausschaltzeit zwischen den Anzeige-Codes hilft, die daran anschließenden Codes für eine bessere Bedienerübersicht auszuschalten.

Das Programm ist so aufgebaut, daß es die verschiedenen Diagnose-Signale in einer vorgegebenen Ordnung oder Priorität bewertet. Das Prüfen eines bestimmten Diagnose-Signals hängt ab von der gegebenen Diagnose-Code-Nummer. Der Diagnose-Code ist eine vierstellige binäre Nummer, die mit 0000 (0) beginnt und mit dem Diagnose-Code 1110 (14) endet. Der Diagnose-Code wird bei Schritt 356 (Zunahme des Diagnose-Codes) jedesmal um 1 erhöht, wenn die Diagnose-Signale bewertet werden. Dies bedeutet im einzelnen, daß jedesmal, wenn ein Diagnosesignal geprüft und nicht gesetzt ist, oder jedesmal, wenn das Diagnosesignal geprüft, gesetzt und der Diagnose-Code angezeigt ist, der Diagnose-Code um 1 erhöht wird, um das nächste Diagnose-Signal in der Diagnose-Code-Reihe zu prüfen.

Die Schritte 334 und 346, 336 und 344 und 338 und 342 sind jeweils gepaart, um eine Diagnose-Anzeige-Entscheidung zu bilden. Der erste Schritt in jedem Paar ist die Bestimmung der jeweiligen Diagnose-Code-Nummer. Da sich diese bei jeder Wiederholung um 1 erhöht, ändert sie sich ständig und bestimmt damit die Priorität und die Reihenfolge der Anzeige-Entscheidungen. Der zweite Schritt in jedem Paar ist an ein bestimmtes Diagnose-Signal gebunden.

Beispielsweise bestimmt der Schritt 346 (Kein Fortbewegungsgeschwindigkeitssignal gesetzt?), ob keine Fortbewegungsgeschwindigkeit während dem Diagnosetest erfaßt worden ist. Wenn diese Bestimmung bejaht wird, leuchtet bei Schritt 358 (Zeige den Diagnose-Code an den Diagnoseanzeigen) der Diagnose-Code 0001 an den Diagnoseanzeigen 134 auf. Wurde eine Fortbewegungsgeschwindigkeit erfaßt, würde der Microcomputer 104 mit dem Schritt 356 fortfahren, wo der Diagnose-Code um 1 auf 0010 (2) erhöht wird. In Schritt 360 (Diagnose-Code = 0000?) wird der Diagnose-Code geprüft, um zu erfahren, ob er 0000 (0) ist, und wenn er dies nicht ist, wird der Microcomputer 104 zurückgeführt, um die Zeitglieder erneut zu setzen. Die Schritte 332 (Diagnose-Code = 0000?) und 334 (Diagnose-Code = 0001?) werden dann wieder hinsichtlich des Diagnose-Codes bis zum Erreichen des Schritts 336 (Diagnose-Code = 0010?) abgefragt. Wenn der Diagnose-Code 0010 ist, führt der Schritt 336 den Microcomputer 104 zu dem Schritt 344, der bestimmt, ob die Fortbewegungsgeschwindigkeit außerhalb eines annehmbaren Bereichs liegt. Der Schritt 344 (Fortbewegungsgeschwindigkeit außerhalb Bereich, Signal gesetzt?) führt den Microcomputer 104 dann entweder zurück durch die Schritte 356 und 360 oder zeigt in Schritt 358 den Diagnose-Code an.

Der Microcomputer 104 durchfährt elf weitere Diagnose-Anzeige-Entscheidungen, die den nicht gezeigten Diagnose-Codes 0011 (3) bis 1101 (13) entsprechen. Diese Diagnose-Codes und die gezeigte Diagnose-Anzeige-Entscheidung sind in der Tabelle 1 aufgelistet. Der Diagnose-Code 1110 (14) wird bei Schritt 338 (Diagnose-Code = 1110?) geprüft. Wenn dieser Diagnose-Code erkannt wird, wird der Microcomputer 104 zu Schritt 342 (NTF-Signal gesetzt?) geführt. Wird dieser Diagnose-Code nicht erkannt, wird der Microcomputer 104 zu dem Schritt 340 (Ende der Anzeigereihe, Signal?) geführt. Der Schritt 342 bestimmt, ob das NTF-Signal (Keinen Fehler gefunden) in Schritt 326 gesetzt wurde. Wurde das NTF-Signal gesetzt, gelangt der Microcomputer 104 zu Schritt 358 (Zeige den Diagnose-Code an Diagnoseanzeige), der die Diagnoseanzeige 134 zum Anzeigen des Diagnose-Codes 1110 bringt. Wurde das NTF-Signal nicht gesetzt, gelangt der Microcomputer 104 zu dem Schritt 356, der den Diagnose-Code um 1 erhöht. Von dort aus führt der Schritt 360 den Microcomputer 104 zurück zum Anfang, um die Zeitglieder zu setzen. Wenn der Diagnose-Code jetzt 1111 (0) ist, verweist der Schritt 340 den Microcomputer 104 zu Schritt 358, der das Ende der Anzeigesignale anzeigt.

Es wird darauf hingewiesen, daß Figur 11 nur einen Teil des Programms zeigt. Im einzelnen sind Diagnose-Code-Schritte und die darauf bezogenen Signal-Bewertungs-Entscheidungen ebenfalls in Tabelle 1 aufgeführt. Diese Diagnose-Schritte sind in einer bestimmten Ordnung geordnet. Ein Wartungsmechaniker stellt den Problembereich, der mit jedem Diagnose-Signal verbunden ist, in der definierten Art fest. Wenn er das zu signalisierende Problem löst und das DGNSET-Programm erneut durchlaufen läßt, um fertig zu prüfen, können einige der nachgeordneten Problemzonen wegfallen, weil sie mit dem gerade beseitigten Problem zusammenhingen.

# Tabelle 1

| Diagnose-Code | Beigeordnetes Signal |
|---|---|
| 0000 (0) | Anfangs- und End-Diagnose-Code (Schritte 332 & 360) |
| 0001 (1) | Keine Fortbewegungsgeschwin- digkeit (Schritte 334 & 346) |
| 0010 (2) | Fortbewegungsgeschwindigkeit liegt außerhalb eines Bereichs (Schritte 336 & 344) |
| 0011 (3) | Keine Erntebergungsvorrichtung |
| 0100 (4) | Die Geschwindigkeit der Aufnahme- einheit liegt außerhalb eines Bereichs |

```
0101 (5)                        Verhältnisschalter 106 - Bit 1

0110 (6)                        Verhältnisschalter 106 - Bit 2

0111 (7)                        Verhältnisschalter 106 - Bit 4

1000 (8)                        Verhältnisschalter 106 - Bit 8

1001 (9)                        J1-3 hat Kurzschluß

1010 (10)                       J1-4 hat Kurzschluß

1011 (11)                       Geschwindigkeit der Aufnahmeein-
                                heit wird sich nicht erhöhen

1100 (12)                       Geschwindigkeit der Aufnahmeein-
                                heit wird sich nicht verringern

1101 (13)                       Nicht benutztes Signal gesetzt

1110 (14)                       Kein Fehlersignal (Schritte 338
                                & 342)

1111 (15)                       Ende der Anzeigereihe (Schritt 340)
```

Der Bewertungsteil dieses Programms beginnt bei Schritt 332 mit dem Diagnose-Code 0000. Er endet auch mit dem Diagnose-Code 0000, und zwar bei Schritt 360. Wenn der Diagnose-Code bei Schritt 360 0000 lautet, kehrt der Microcomputer 104 zu dem Anfang der DGNSET-Unterschleife zurück.

Die oben beschriebene Erfindung stellt eine automatische Regelvorrichtung zum Regeln der Geschwindigkeit von Aufnahmeeinheiten 22 für Erntemaschinen 10 dar. Das beschriebene Verfahren der Regelvorrichtung ist einfach zu handhaben und kann in Verbindung mit einer Vielzahl von Erntegeräten verwendet werden.

**Patentansprüche**

1. Regelvorrichtung für eine fahrbare Erntemaschine (10) mit einer Erntebergungsvorrichtung (22), die eine Aufnahmeeinrichtung (23) enthält, die als Haspel oder als Pflücker oder als Gebiß oder als Pick-Up ausgebildet und über ein geschwindigkeitsvariables Getriebe antreibbar ist, wobei die Antriebsgeschwindigkeit der Aufnahmeeinrichtung (23) in Abhängigkeit von der Fortbewegungsgeschwindigkeit der Erntemaschine (10) über ein Ventil (70) veränderbar ist, mit einem Geschwindigkeitssensor (122) zur Erfassung der Fortbewegungsgeschwindigkeit der Erntemaschine (10), gekennzeichnet durch
   a) einen Geschwindigkeitssensor (120) zur Erfassung der Antriebsgeschwindigkeit der Aufnahmeeinrichtung (23),
   b) einen Verhältnisschalter (106) zur Erzeugung eines Verhältniswertes zwischen der Fortbewegungsgeschwindigkeit und Antriebsgeschwindigkeit der Aufnahmeeinrichtung (23),

EP 0 377 163 B1

c) einen elektronischen Microcomputer (104), dem die Ausgangssignale der Geschwindigkeitssensoren (120, 122) und des Verhältnisschalters (106) zuführbar sind und der daraus ein Ausgangssignal bildet, das dem Ventil (70) zugeführt wird, und

d) einen Anbaugeräteschalter (144), der dem Microcomputer (104) ein Signal zuführt, das angibt, ob bzw. welche jeweils verwendete Art der Aufnahmeeinrichtung (23) sich an der Erntemaschine (10) befindet.

2. Regelvorrichtung nach Anspruch 1, dadurch gekennzeichnet, daß die Aufnahmeeinrichtung (23) mittels einer Hydraulikpumpe (61) und einem Hydraulikmotor (60) angetrieben wird, wobei der Druckmittelstrom von der Hydraulikpumpe (61) zu dem Hydraulikmotor (60) über das Ventil (70) erfolgt, dessen Durchlaß von dem Microcomputer (104) steuerbar ist.

3. Regelvorrichtung nach Anspruch 2, dadurch gekennzeichnet, daß zur Verstellung des Ventils (70) ein Getriebemotor (72) vorgesehen ist.

4. Regelvorrichtung nach Anspruch 2 oder 3, dadurch gekennzeichnet, daß das Ventil (70) manuell und unabhängig von dem Microcomputer (104) verstellbar ist.

5. Regelvorrichtung nach Anspruch 1 dadurch gekennzeichnet, daß die Aufnahmeeinrichtung (23) über ein Zugmittelgetriebe mit hydraulisch verstellbaren Scheiben angetrieben wird und die Stellung der Scheiben über den Microcomputer (104) steuerbar ist.

6. Regelvorrichtung nach Anspruch 5, dadurch gekennzeichnet, daß die hydraulische Verstellung der Scheiben über ein Ventil (70) steuerbar ist, das in Abhängigkeit von einem in dem Microcomputer (104) gebildeten Regelsignal verstellbar ist.

7. Regelvorrichtung nach einem oder mehreren der vorherigen Ansprüche, dadurch gekennzeichnet, daß der Microcomputer (104) einen Regler (100) enthält, der eine Anpassung des von dem Microcomputer (104) zur Regelung der Antriebsgeschwindigkeit ausgesandten Signals an die Art der Aufnahmeeinheit (23) vornimmt.

8. Verfahren zum Anpassen der Geschwindigkeit einer Aufnahmeeinrichtung (23) einer fahrbaren Erntemaschine (10) an deren Fortbewegungsgeschwindigkeit mittels eines Microcomputers (104), wobei unterschiedliche Aufnahmeeinheiten (23) angebaut werden können, mit folgenden Verfahrensschritten:

a) Erfassung der Fortbewegungsgeschwindigkeit der Erntemaschine (10) mittels eines Geschwindigkeitssensors (122);

b) Erfassung der Aufnahmegeschwindigkeit der Aufnahmeeinrichtung (23) mittels eines Geschwindigkeitssensors (120);

c) Erfassung eines über einen Verhältnisschalter (106) eingegebenen Verhältniswertes zwischen der Fortbewegungsgeschwindigkeit der Erntemaschine (10) und der Aufnahmegeschwindigkeit der Aufnahmeeinrichtung (23);

d) Errechnung einer neuen Aufnahmegeschwindigkeit der Aufnahmeeinrichtung (23) mittels eines Microcomputers (104);

e) Ermittlung, ob die gegebene Aufnahmegeschwindigkeit der neu berechneten, gewünschten Aufnahmegeschwindigkeit entspricht,

f) erforderlichenfalls Veränderung der Aufnahmegeschwindigkeit der Aufnahmeeinrichtung (23), und

g) Erfassung der jeweils verwendeten Art der Erntebergungsvorrichtung (22) und somit der Art der Aufnahmeeinrichtung (23) mittels eines Anbaugeräteschalters (144) und Weitergabe eines entsprechenden Signals an den Microcomputer (104).

9. Verfahren nach Anspruch 8, unter Verwendung einer Kurve mit Verstärkungsänderungspunkten zur Anpassung der Aufnahmegeschwindigkeit an die Fortbewegungsgeschwindigkeit.

10. Verfahren nach Anspruch 9, wobei die Kurve nichtlinear verläuft, um eine schnelle Anpassung der Aufnahmegeschwindigkeit zu erreichen.

11. Verfahren nach einem oder mehreren der Ansprüche 8 bis 10, mit dem weiteren Verfahrensschritt:

h) Ermittlung, ob die Aufnahmegeschwindigkeit der Aufnahmeeinrichtung (23) manuell verstellt wird.

14

**12.** Verfahren nach einem oder mehreren der Ansprüche 8 bis 11, mit dem weiteren Verfahrensschritt:
i) Ermittlung, ob ein Schalter (106) zum Durchführen eines Diagnose-Verfahrens betätigt ist.

**13.** Verfahren, wenn die Ermittlung nach Anspruch 12 ergibt, daß der Schalter (106) zum Durchführen eines Diagnose-Verfahrens betätigt ist, mit dem weiteren Verfahrensschritt:
j) Unterziehe die Aufnahmeeinheit (23) einem Diagnose-Verfahren

**14.** Verfahren nach Anspruch 13 mit dem weiteren Verfahrensschritt:
k) Setze ein Diagnose-Signal in jedem Fall, in dem ein Problem während des Diagnose-Verfahrens auftritt.

**15.** Verfahren nach Anspruch 14 mit dem weiteren Verfahrensschritt:
l) Ordne die Diagnose-Signale nach einer bestimmten Reihenfolge und zeige sie in dieser Reihenfolge an.

**16.** Verfahren nach Anspruch 14 mit dem weiteren Verfahrensschritt:
m) Ordne jedem Diagnose-Signal einen Diagnose-Code zu.

**17.** Verfahren nach Anspruch 16 mit dem weiteren Verfahrensschritt:
n) Benutze den Diagnose-Code, um die Diagnose-Signale in einer bestimmten Reihenfolge zu ordnen.

**18.** Verfahren nach Anspruch 17 mit dem weiteren Verfahrensschritt:
o) Zeige die Diagnose-Codes in der festgelegten Reihenfolge an.

**Claims**

**1.** A control device for a mobile harvesting machine (10) having a harvesting device (22) which includes a receiving device (23) formed as a reel or a picker or teeth or a pick-up and which can be driven by a variable speed transmission, wherein the drive speed of the receiving device (23) can be varied in dependence on the speed of travel of the harvesting machine (10) by means of a valve (70), with a speed sensor (122) for detecting the speed of travel of the harvesting machine (10), characterized by
a) a speed sensor (120) for detecting the drive speed of the receiving device (23),
b) a ratio switch (106) for generating a ratio value between the speed of travel and the drive speed of the receiving device (23),
c) an electronic microcomputer (104) to which the output signals of the speed sensors (120, 122) and of the ratio switch (106) can be applied and which forms an output signal therefrom, this being fed to the valve (70), and
d) an attachment switch (144) which applies a signal to the microcomputer (104) to indicate whether or what currently used kind of receiving device (23) is present on the harvesting machine (10).

**2.** A control device according to claim 1, characterized in that the receiving device (23) is driven by means of a hydraulic pump (61) and a hydraulic motor (60), wherein the flow of pressure medium from the hydraulic pump (61) to the hydraulic motor (70) is effected through the valve (70), whose throughflow can be controlled by the microcomputer (104).

**3.** A control device according to claim 2, characterized in that a gear motor (72) is provided to adjust the valve (70).

**4.** A control device according to claim 2 or 3, characterized in that the valve (70) can be adjusted manually and independently of the microcomputer (104).

**5.** A control device according to claim 1, characterized in that the receiving device (23) is driven by a belt drive with hydraulically adjustable pulleys, the position of the pulleys being controllable by the microcomputer (104).

**6.** A control device according to claim 5, characterized in that the hydraulic adjustment of the pulleys can be controlled by a valve (70) which is adjustable in dependence on a control signal formed by the microcomputer (104).

7. A control device according to one or more of the preceding claims, characterized in that the microcomputer (104) includes a regulator (100) which effects adaptation to the kind of the receiving device (23) of the signals issued by the microcomputer (104) for the control of the drive speed.

8. A method of adapting the speed of a receiving device (23) of a mobile harvesting machine (10) to its speed of travel, by means of a microcomputer (104), wherein different receiving devices (23) can be attached, with the following method steps:
   a) detecting the speed of travel of the harvesting machine (10) by means of a speed sensor (122);
   b) detecting the receiving speed of the receiving device (23) by means of a speed sensor (120);
   c) detecting a ratio value entered by a ratio switch (106) between the speed of travel of the harvesting machine (10) and the receiving speed of the receiving device (23);
   d) computing a new receiving speed of the receiving device (23) by means of a microcomputer (104);
   e) determining whether the detected receiving speed corresponds to the newly computed, desired receiving speed,
   f) if required, altering the receiving speed of the receiving device (23), and
   g) detecting the currently used kind of harvesting device (22) and thus the kind of the receiving device (23) by means of an attachment switch (144) and passing a corresponding signal to the microcomputer (104).

9. A method according to claim 8, using a curve with gain change points for adapting the receiving speed to the speed of travel.

10. A method according to claim 9, wherein the curve is non-linear, in order to obtain rapid adaptation of the receiving speed.

11. A method according to one or more of claims 8 to 10, with the further method step:
   h) determining whether the receiving speed of the receiving device (23) is being manually adjusted.

12. A method according to one or more of claims 8 to 11, with the further method step:
   i) determining whether a switch (106) for carrying out a diagnostic process is actuated.

13. A method, when the determination according to claim 12 shows that the switch (106) for carrying out a diagnostic process is actuated, with the following method step:
   j) subjecting the receiving device (23) to a diagnostic process.

14. A method according to claim 13, with the further method step:
   k) set a diagnostic signal in any case in which a problem occurs during the diagnostic process.

15. A method according to claim 14, with the further method step:
   l) ordering the diagnostic signals in a given sequence and displaying them in this sequence.

16. A method according to claim 14, with the further method step:
   m) associating a diagnosis code with each diagnosis signal.

17. A method according to claim 16, with the further method step:
   n) using the diagnosis code to order the diagnosis signals in a given sequence.

18. A method according to claim 17, with the further method step:
   o) displaying the diagnosis codes in the fixed sequence.

**Revendications**

1. Dispositif de régulation pour une récolteuse mobile (10) équipée d'un dispositif (22) de récupération du produit récolté contenant un dispositif de ramassage (23) qui est réalisé sous la forme d'un rabatteur, d'un cueilleur, d'un râtelier ou d'un tambour de ramassage et qui peut être entraîné au moyen d'un mécanisme de transmission à vitesse variable, la vitesse d'entraînement du dispositif de ramassage (23) pouvant, au moyen d'une soupape (70), être modifiée en fonction de la vitesse de marche de la récolteuse (10), avec un capteur de vitesse (122) pour détecter la vitesse de marche de la récolteuse (10), **caractérisé** par

a) un capteur de vitesse (120) pour détecter la vitesse d'entraînement du dispositif de ramassage (23),

b) un commutateur de rapport (106) pour produire une valeur de rapport entre la vitesse de marche et la vitesse d'entraînement du dispositif de ramassage (23),

c) un micro-calculateur électronique (104), qui peut recevoir les signaux de sortie des capteurs de vitesse (120, 122) et du commutateur de rapport (106) et qui forme à partir de ces signaux un signal de sortie qui est transmis à la soupape (70), et

d) un commutateur d'équipement porté (144), qui transmet au micro-calculateur (104) un signal qui indique la présence ou le type de dispositif de ramassage (23) chaque fois présent sur la récolteuse (10).

2. Dispositif de régulation selon la revendication 1, **caractérisé** en ce que le dispositif de ramassage (23) est entraîné au moyen d'une pompe hydraulique (61) et d'un moteur hydraulique (60), le fluide hydraulique s'écoulant de la pompe hydraulique (61) vers le moteur hydraulique (60) par l'intermédiaire de la soupape (70), dont le débit de passage peut être commandé par le micro-calculateur (104).

3. Dispositif de régulation selon la revendication 2, **caractérisé** en ce qu'un moto-réducteur (72) est prévu pour le réglage de la soupape (70).

4. Dispositif de régulation selon la revendication 2 ou 3, **caractérisé** en ce que la soupape (70) peut être réglée manuellement et indépendamment du micro-calculateur (104).

5. Dispositif de régulation selon la revendication 1, **caractérisé** en ce que le dispositif de ramassage (23) est entraîné au moyen d'une transmission à moyen de traction à poulies hydrauliquement réglables, et la position des poulies peut être commandée au moyen du micro-calculateur (104).

6. Dispositif de régulation selon la revendication 5, **caractérisé** en ce que le réglage hydraulique des poulies peut être commandé au moyen d'une soupape (70) qui peut être réglée en fonction d'un signal de régulation formé dans le micro-calculateur (104).

7. Dispositif de régulation selon l'une quelconque des revendications précédentes, **caractérisé** en ce que le micro-calculateur (104) contient un régulateur (100) qui entreprend une adaptation, au type d'unité de ramassage (23), du signal émis par le micro-calculateur (104) pour réguler la vitesse d'entraînement.

8. Procédé pour adapter la vitesse d'un dispositif de ramassage (23) d'une récolteuse mobile (10) à la vitesse de marche de cette récolteuse au moyen d'un micro-calculateur (104), différentes unités de ramassage (23) pouvant être montées, avec les étapes de procédé suivantes :

a) détection de la vitesse de marche de la récolteuse (10) au moyen d'un capteur de vitesse (122);

b) détection de la vitesse de ramassage du dispositif de ramassage (23) au moyen d'un capteur de vitesse (120);

c) détection d'une valeur de rapport, introduit au moyen d'un commutateur de rapport (106), entre la vitesse de marche de la récolteuse (10) et la vitesse de ramassage du dispositif de ramassage (23) ;

d) calcul d'une nouvelle vitesse de ramassage du dispositif de ramassage (23) au moyen d'un micro-calculateur (104) ;

e) détermination si la vitesse donnée de ramassage correspond à la vitesse de ramassage souhaitée, nouvellement calculée ;

f) si nécessaire, modification de la vitesse de ramassage du dispositif de ramassage (23), et

g) détection du type chaque fois utilisé de dispositif (22) de récupération du produit récolté, et donc du type de dispositif de ramassage (23), au moyen d'un commutateur d'équipement porté (144), et transmission d'un signal correspondant au micro-calculateur (104).

9. Procédé selon la revendication 8, en utilisant une courbe avec des points de modification d'amplification pour l'adaptation de la vitesse de ramassage à la vitesse de marche.

**10.** Procédé selon la revendication 9, l'allure de la courbe étant non linéaire afin d'obtenir une adaptation rapide de la vitesse de ramassage.

**11.** Procédé selon l'une quelconque des revendications 8 à 10, avec l'étape de procédé supplémentaire suivante :

h) détermination si la vitesse de ramassage du dispositif de ramassage (23) est réglée manuellement.

**12.** Procédé selon l'une quelconque des revendications 8 à 11, avec l'étape de procédé supplémentaire suivante :

i) détermination si un commutateur (106) pour l'exécution d'un processus de diagnostic est actionné.

**13.** Procédé, lorsqu'il résulte de la détermination selon la revendication 12 que le commutateur (106) pour l'exécution d'un processus de diagnostic est actionné, avec l'étape de procédé supplémentaire suivante :

j) soumission de l'unité de ramassage (23) à un processus de diagnostic.

**14.** Procédé selon la revendication 13, avec l'étape de procédé supplémentaire suivante :

k) pose d'un signal de diagnostic à chaque fois qu'un problème apparaît pendant le processus de diagnostic.

**15.** Procédé selon la revendication 14, avec l'étape de procédé supplémentaire suivante :

l) classement des signaux de diagnostic dans un ordre déterminé, et affichage des signaux dans cet ordre.

**16.** Procédé selon la revendication 14, avec l'étape de procédé supplémentaire suivante :

m) affectation d'un code de diagnostic à chaque signal de diagnostic.

**17.** Procédé selon la revendication 16, avec l'étape de procédé supplémentaire suivante :

n) utilisation du code de diagnostic pour classer les signaux de diagnostic dans un ordre déterminé.

**18.** Procédé selon la revendication 17, avec l'étape de procédé supplémentaire suivante :

o) affichage des codes de diagnostic dans l'ordre fixé.

Fig. 1

**Fig. 2**

28 — ENGINE

14 — WHEEL AND TIRE ← 64 — FINAL DRIVE ← 19 — TRANSMISSION ← 18 — HYDRO MOTOR ← 62 — HYDRO PUMP

61 — PUMP FOR REEL OR BELT PICKUP DRIVE

HYDRAULIC RESERVOIR

POWER CONDITIONER

+12V.

+5V.

+12V.

73

140

106 — SPEED RATIO SWITCH

100 — REEL SPEED ELECTRONIC CONTROLLER

72 — D.C. GEARMOTOR

70 — FLOW CONTROL VALVE

60 — HYDRAULIC MOTOR TO DRIVE REEL OR BELT PICKUP

23 — REEL OR BELT PICKUP

143 — SOLENOID VALVE CONTROL

150 — SOLENOID VALVES FOR VARIABLE SHEAVE

124 — SPEED SENSOR

120 — SPEED SENSOR

EP 0 377 163 B1

Fig. 3

**Fig. 4**

*Fig. 5*

Fig. 6

**MICROCOMPUTER** 104

PBI
PB8
ANO
ANI
VSS
VRL
PAI
PAO
PA7
PB7
PC5

142 — PERMANENT MAGNET MOTOR CONTROL

+5V.
+5V.
+12V.
Q6
Q7
Q8
Q5
Q1
Q2

+5V.
+5V.
+5V.
+5V.
Q9
Q3
Q4
Q12
Q10
Q11

SOLENOID VALVE CONTROL

+12V.
+12V.
146
148
Q20
Q22

+5V.
+12V.

143 —

SOLENOID VALVES — 150
154  152

D.C. GEARMOTOR
72
JI-4
JI-3

*Fig. 7*

EP 0 377 163 B1

**Fig. 8**

**Fig. 13**

*Fig. 9*

REEL

DETECT SELECTED SPEED RATIO ⌐206

SENSE GND. SPD. ⌐208

SENSE REEL SPD. ⌐210

CALCULATE DESIRED REEL SPEED FROM GND. SPD. X RATIO ⌐212

SET UP GAIN CHG. POINTS BASED ON DESIRED REEL SPEED ⌐214

ERROR=DESIRED - ACTUAL REEL SPD. ⌐216

ERROR POSITIVE ? ⌐218

NO

=

YES

NEGATIVE OUTPUT = |ERROR| X GAIN ⌐222

POSITIVE OUTPUT= ERROR X GAIN ⌐220

MOTOR SHORT CIRCUITED ? ⌐224

YES

NO

DIRECT OUTPUT TO MOTOR ⌐228

TURN OFF OUTPUTS ⌐226

MAIN

**Fig. 10**

PICKER

SENSE PICKER & GROUND SPEEDS — 250

DETECT SELECTED SPEED RATIO — 251

GROUND SPD. IN CONTROL RANGE ? — 252
NO → SET FLAG — 256
YES

PICKER SPD. IN CONTROL RANGE ? — 254
NO → SET FLAG — 258
YES

CALCULATE DESIRED PICKER SPEED
CALCULATE DEAD-BANDS (+ AND -) — 260

ERROR = DESIRED - ACTUAL PICKER SPD. — 262

ERROR > + DEADBAND — 264
NO

ERROR < + DEADBAND — 266
NO → TURN OFF DRIVERS — 272
YES → TURN ON DE-CREASE DRIVER — 270

YES → TURN ON IN-CREASE DRIVER — 268

MAIN

27

# Fig. 11

DGN SET

CHECK SWITCH 106 ? — 300

NO → SET FLAGS — 301

YES

FINISH EXERCISE ? — 302

YES

NO

IS SWITCH 106 IN CHECK ? — 304

NO

YES

EXERCISING ? — 306

YES

NO → 308

TURN OFF REEL AND PICKER

IDENTIFY HARVESTER ASSY. — 310

PICKER

REEL

PERFORM EXERCISE & PICKER DIAGNOSTICS — 314

SET FLAGS — 315

PERFORM EXERCISE & REEL DIAGNOSTICS — 312

SET FLAGS — 313

IS EXERCISE COMPLETE ? — 318

NO

NO

IS EXERCISE COMPLETE ? — 316

YES

CHKTYP

YES

DIADSP

Fig. 12a

**Fig. 12b**